# EUROPEAN PATENT SPECIFICATION

(11) **EP 2 584 101 B1**
(45) Date of publication and mention of the grant of the patent: **10.05.2017**
(21) Application number: 11795594.8
(22) Date of filing: 06.06.2011
(51) Int. Cl.: E02F 9/00, E02F 9/08

(54) **ELECTRIC CONSTRUCTION MACHINE**
ELEKTRISCHE BAUMASCHINE
MACHINE DE CONSTRUCTION ÉLECTRIQUE

(30) Priority: 15.06.2010 JP 2010136384
(43) Date of publication of application: 24.04.2013
(73) Proprietor: Hitachi Construction Machinery Tierra Co., Ltd., Koka-shi, Shiga 528-0061 (JP)
(72) Inventor: NOGUCHI, Akira, Tsuchiura-shi Ibaraki 300-0013 (JP); YUNOUE, Masayuki, Tsuchiura-shi Ibaraki 300-0013 (JP)
(74) Representative: Beetz & Partner mbB
(86) International application number: PCT/JP2011/062978
(87) International publication number: WO 2011/158686

(56) References cited:
- WO-A1-2007/091664
- JP-A- 9 144 062
- JP-A- H08 326 100
- JP-A- 2006 177 118
- JP-A- 2007 321 519
- JP-A- 2008 019 616
- JP-A- 2008 044 408
- JP-A- 2008 044 408
- JP-A- 2008 075 372
- JP-A- 2008 127 762
- US-A- 3 497 090
- US-A- 3 721 353

## Description

### Technical Field

The present invention relates to an electric construction machine such as hydraulic shovel, wheel loader, etc., which has an electric motor as a source of power and is operable with a battery device and a commercial power supply.

### Background Art

Construction machines such as hydraulic shovels used for excavation work and demolition work are generally configured to supply the hydraulic fluid for the operation (hydraulic operating fluid) to hydraulic actuators such as a hydraulic motor for the traveling, a hydraulic motor for swinging, various hydraulic cylinders constituting a work implement, etc. by driving a hydraulic pump with a diesel engine.

Meanwhile, in response to the upsurge of the efforts toward low-carbon society, there has recently been proposed an electric hydraulic shovel comprising an electric motor as the source of power for driving the hydraulic pump in place of the engine and a battery device for supplying electric power to the electric motor (Patent Literature 1).

In the above electric hydraulic shovel according to the conventional technology, the cab seat is arranged on the left side of the upper swing structure with respect to the transverse direction of the upper swing structure. The hydraulic pump, the electric motor, an oil tank, a heat exchanger (oil cooler), etc. are arranged on the right side of the cab seat. The battery device is arranged to the rear of the cab seat. The hydraulic pump, the electric motor, the oil tank, the heat exchanger, the battery device, etc. are stored in a single storage space formed by a cover. The hydraulic pump, the electric motor, the oil tank, the heat exchanger, etc. are cooled down by a cooling air flow which is circulated inside the storage space by a cooling fan.

### Prior Art Literature

### Patent Literature

Patent Literature 1: JP,A 11-140906

JP2008019616, discloses a construction machine in which a battery is arranged oppositely a rear side of the electric motor and a hydraulic pump.

JP2007325119, discloses a construction machine counterweight having a certain cover. The machine has batteries.

JP 08326100, discloses a construction machine frame structure capable of shielding a power device from other members.

### Problem to be Solved by the Invention

However, there is certain limitation on the amount of electricity storable in the battery device. With the present performance of batteries, it is difficult, even for a small-sized construction machine (e.g., small hydraulic shovel (so-called mini-shovel)), to continue the operation for an entire day with no replacement of the battery device, unless the battery device is used together with the commercial power supply.

Therefore, when an electric hydraulic shovel is used for operations for a long time at a place where no commercial power supply is available, the operator is forced to temporarily stop the current operation, move the hydraulic shovel to a place where the commercial power supply is available, and recharge the batteries, or to call a serviceperson to make him/her remove the exterior cover of the hydraulic shovel and replace the currently used battery device with a recharged battery device. The recharging of the batteries and the replacement of the heavy battery device at the worksite take a long time, which not only are inconvenient but also seriously deteriorate the working efficiency of the hydraulic shovel.

Further, the battery device needs periodical maintenance by a serviceperson. Also for the maintenance of the battery device, the exterior cover of the hydraulic shovel has to be removed or the battery device has to be detached from the hydraulic shovel for checking the battery device. In the case of checking the battery device without detaching it from the construction machine, however, performing the check properly and efficiently is impossible since the battery device has been installed in a small space. The detaching of the battery device at the worksite also takes a considerably long time similarly to the replacement of the battery device, which seriously deteriorates the working efficiency.

Furthermore, the battery technology is progressing remarkably these days. Especially, the lithium-ion batteries have high charging capacities and their capacities are expected to increase more and more in years to come. Therefore, it is desirable that the electric construction machines be designed to allow for replacement of the batteries with different types of batteries according to the progress of the battery technology.

### Summary of the Invention

It is therefore the primary object of the present invention to provide an electric construction machine that enables quick and easy replacement of the battery device while allowing for easy replacement of the battery device with different types of battery devices according to the progress of the battery technology.

### Means for Solving the Problem

The above object is accomplished by the features of claim 1.
(1) To achieve the above object, provided is an electric construction machine having the features of claim 1. A battery device is mounted on a rear part of a vehicle body thereof, the electric construction machine performing operations by driving an electric motor with the battery device, wherein the vehicle body is made up of a vehicle main body and a vehicle rear part, wherein the vehicle main body includes a vehicle body frame to whose front a work implement is attached and a cab seat and a machine room, the cab seat and the machine room being provided on the vehicle body frame, wherein the vehicle body frame includes a main frame to whose front the work implement is attached, wherein the main frame has an overhanging part overhanging and extending in a longitudinal direction to reach the underside of the vehicle rear part, wherein the vehicle rear part includes a rear frame to be mounted on the overhanging part and a rear cover covering the rear frame, the rear cover forming therein a battery room in which the battery device is arranged and having a shape imitating a counter weight, and wherein the rear frame mounted on the overhanging part is fixed on the overhanging part using a bolt and is detachable from the overhanging part by removing the bolt.
   As mentioned above, the capacity (storable amount of electricity) of the battery device is limited and with the present performance of batteries, it is difficult even for a small-sized construction machine (e.g., small hydraulic shovel (so-called mini-shovel)) to continue the operation for an entire day with no replacement of the battery device unless the battery device is used together with the commercial power supply.
   In the present invention, the vehicle body is made up of the vehicle main body and the vehicle rear part. The electric construction machine is configured so that the vehicle rear part is detachable from the vehicle main body by removing the bolt. Therefore, the replacement of the vehicle rear part is facilitated. Even when the electric construction machine is used for operations for a long time at a place where no commercial power supply is available, it is possible to replace the battery device easily and quickly and to increase the working efficiency by preparing another vehicle rear part loaded with a recharged battery device, detaching the already-attached vehicle rear part from the vehicle main body when the electricity amount of the battery device on the vehicle rear part has become insufficient, and attaching the prepared vehicle rear part that is loaded with the recharged battery device, to the vehicle main body.
   The maintenance of the battery device can also be done with ease, by replacing the vehicle rear part with another vehicle rear part loaded with a recharged battery device and moving the detached vehicle rear part to maintenance facilities.
   Further, when a different type of battery device having an increased capacity has appeared due to the progress of the battery technology and the new battery device is desired to be mounted to the an electric construction machine, it is possible to detach the vehicle rear part loaded with the currently used battery device from the vehicle main body and attach another vehicle rear part loaded with the different type of battery device to the vehicle main body. Consequently, the battery device can easily be replaced with different types of battery devices according to the progress of the battery technology.
   Furthermore, the rear frame of the vehicle rear part can be formed in various shapes differing in the length in the longitudinal direction, by which the number of the mounted batteries can be changed and adjusted to suit the operating time required of the electric construction machine.
   Moreover, since the battery room is formed inside the rear cover, the battery device can be protected from shocks from the outside during the swing of the vehicle body. By forming the vehicle rear part in a shape imitating the counter weight, an external appearance having innovativeness can be given to the electric construction machine.
(2) Preferably, in the electric construction machine (1), the overhanging part of the main frame of the vehicle main body includes two longitudinal ribs overhanging and extending in parallel in the longitudinal direction to reach the underside of the rear frame of the vehicle rear part. The rear frame of the vehicle rear part includes a base frame which couples with the two longitudinal ribs of the main frame from above. The base frame mounted on the two longitudinal ribs of the main frame is fixed on the two longitudinal ribs using the bolt.
   With this configuration, the movement of the rear frame in the transverse direction is restricted by the base frame and the two longitudinal ribs of the main frame. Consequently, the vehicle rear part can be held and fixed stably with respect to the vehicle main body.
(3) Preferably, in the electric construction machine (2), fixing means for fixing the base frame on the two longitudinal ribs of the main frame includes not only the bolt but also two positioning pins provided corresponding to the two longitudinal ribs of the main frame. The base frame mounted on the two longitudinal ribs of the main frame is fixed on the two longitudinal ribs and prevented from coming off using the two positioning pins and the bolt, the base frame being detachable from the two longitudinal ribs by removing the positioning pins and the bolt.
   With this configuration, the whole of the vehicle rear part can be attached to and detached from the vehicle main body with ease while leaving the battery device mounted on the vehicle rear part.
(4) Preferably, in the electric construction machine (2), the base frame includes two side plates to be arranged inside the two longitudinal ribs, a base plate connecting lower ends of the two side plates, and outward horizontal flanges provided at upper ends of the two side plates, respectively. The base frame is mounted on the two longitudinal ribs by making the horizontal flanges be supported on upper ends of the two longitudinal ribs.
   With this configuration, the movement of the rear frame in the transverse direction is restricted by the two side plates of the base frame and the two longitudinal ribs of the main frame, and the movement of the rear frame in the vertical direction is restricted by the horizontal flanges of the base frame and the two longitudinal ribs of the main frame. Consequently, the vehicle rear part can be fixed to the vehicle main body more stably.
(5) Preferably, in the electric construction machine (2), the base frame has a support part to be used for setting the vehicle rear part on forks of a forklift. The support part is provided on the lower surface of the base frame and between the two longitudinal ribs of the main frame. The vehicle rear part is movable with respect to the vehicle main body using the forklift.
   With this configuration, the vehicle rear part can be replaced safely by use of a forklift even when the vehicle rear part loaded with the battery device is heavy.
(6) Preferably, in the electric construction machine (2), the vehicle rear part further includes at least one rear post erected on a rear part of the base frame and a battery storage structure attached on the base frame with bolts and storing the battery device. The rear post and the battery storage structure are equipped with wire attaching parts. The vehicle rear part is movable with respect to the vehicle main body by using a crane by attaching wires for the crane to the wire attaching parts.
   With this configuration, the vehicle rear part can be replaced safely by use of a crane even when the vehicle rear part loaded with the battery storage structure is heavy.
(7) Preferably, in the electric construction machine (2), the base frame has a plurality of mount rubbers attached thereon at prescribed intervals in the longitudinal direction. The vehicle rear part further includes a battery storage structure attached on the base frame with bolts via the mount rubbers and storing the battery device.
   With this configuration, vertical vibrations of the battery storage structure and the battery device during the operation of the construction machine are absorbed, by which the battery device and the battery storage structure can be protected from vertical operating vibrations of the construction machine.
   Further, by standardizing the lowermost attaching part of the battery storage structure (i.e., battery table mount), it becomes possible to mount various types of battery storage structures differing in the configuration. Consequently, various types of batteries can easily be mounted according to the progress of the battery technology.
(8) Preferably, in the electric construction machine (7), the battery storage structure has a plurality of wire attaching parts. The battery storage structure is movable in the vertical direction with respect to the base frame by using a crane by attaching wires for the crane to the wire attaching parts.
   With this configuration, the battery storage structure can be replaced safely by use of a crane even when the battery storage structure loaded with the battery device is heavy.
(9) Preferably, in the electric construction machine (2), the vehicle rear part further includes a battery storage structure attached on the base frame and storing the battery device. The battery storage structure includes a battery table mount mounted on the base frame and multiple stages of battery tables mounted on the battery table mount. A battery table as the lowermost one of the multiple stages of battery tables is fixed on the battery table mount using bolts. The multiple stages of battery tables are supported to be separated from each other in the vertical direction via posts and are integrated by fixing upper and lower ends of each of the posts to corresponding battery tables with bolts.
   With this configuration, a lot of battery modules can be mounted and the attaching/detaching of the battery modules can be conducted safely and easily.
(10) Preferably, in the electric construction machine (1), the vehicle main body includes the cab seat provided on the vehicle body frame and a machine room in which a plurality of devices including the electric motor and an inverter for controlling the electric motor are arranged.
   The rear cover included in the vehicle rear part and having the shape imitating the counter weight covers a rear part, a right-hand part, a left-hand part and a top part of the vehicle rear part. The machine room is separated from the other parts of the vehicle main body by a partition plate. When the vehicle rear part is connected with the vehicle main body, the battery room formed by the rear cover secures a space insulated from heat sources in the machine room by the partition plate. The space prevents effects of heat on batteries of the battery device arranged in the battery room.

With this configuration, the temperature rise as a cause of deterioration of the battery modules can be prevented.

### Effect of the Invention

According to the present invention, the replacement of the battery device can be conducted easily and quickly and the working efficiency can be increased.

Since the battery device can be replaced easily and quickly, the maintenance of the battery device can be done with ease.

Further, since the battery device can be replaced by detaching the whole of the vehicle rear part from the vehicle main body, the battery device can easily be replaced with different types of battery devices according to the progress of the battery technology.

Furthermore, the rear frame of the vehicle rear part can be formed in various shapes differing in the length in the longitudinal direction, by which the number of the mounted batteries can be changed and adjusted to suit the operating time required of the electric construction machine.

Moreover, since the battery room is formed inside the rear cover, the battery device can be protected from shocks from the outside during the swing of the vehicle body. By forming the vehicle rear part in a shape imitating the counter weight, an external appearance having innovativeness can be given to the electric construction machine.

### Brief Description of the Drawings

Fig. 1 is a perspective view showing the external appearance of an electric hydraulic shovel in accordance with an embodiment of the present invention.
Fig. 2 is a schematic diagram showing a state in which an upper swing structure of the hydraulic shovel has been separated into a vehicle main body and a vehicle rear part, wherein the separated upper swing structure is viewed from its left side.
Fig. 3 is a schematic diagram showing the state in which the upper swing structure of the hydraulic shovel has been separated into the vehicle main body and the vehicle rear part, wherein the separated upper swing structure is viewed from its right side.
Fig. 4 is a perspective view magnifying a swing frame of the vehicle main body.
Fig. 5 is a perspective view magnifying a rear frame of the vehicle rear part.
Fig. 6 is a perspective view of a battery storage structure on which a battery device has been mounted.
Fig. 7 is an exploded perspective view of the battery storage structure.
Fig. 8 is a perspective view of the battery storage structure.

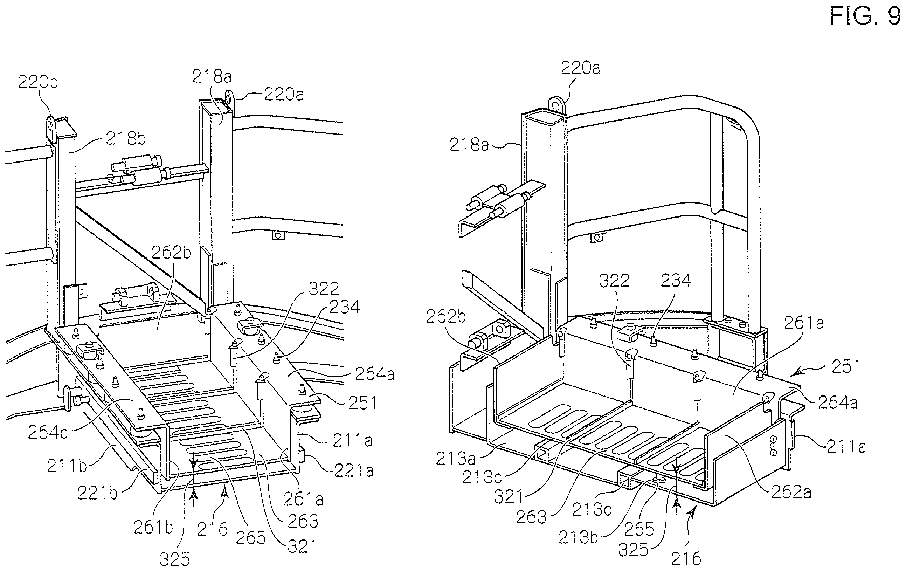

Fig. 9 is a schematic diagram showing the details of the positional relationship between a battery table mount and a base frame of the rear frame and the details of base structure of the two parts when the battery table mount has been installed in the box-shaped base frame, wherein the left-hand side is a cutaway view in which front parts of the base frame and the battery table mount have been cut away at a plane extending in the transverse direction and the right-hand side is a cutaway view in which right-hand parts of the base frame and the battery table mount have been cut away at a plane extending in the longitudinal direction.
Fig. 10 is a schematic diagram showing a state in which battery modules have been stored in the battery table mount.
Fig. 11 is a schematic diagram showing a state in which battery modules have been mounted on a lowermost battery table and the loaded battery table has been attached on the battery table mount shown in Fig. 10.
Fig. 12 is a schematic diagram showing a state in which battery modules have been mounted on a second battery table and the loaded battery table has been attached on the lowermost battery table shown in Fig. 11.
Fig. 13 is a schematic diagram showing the details of a method for attaching a battery module to a third battery table and showing a state in which a battery module has been detached from a right side plate of the third battery table.
Fig. 14 is a schematic diagram showing the details of the method for attaching a battery module to the third battery table and showing a state in which the battery module has been attached to the right side plate of the third battery table.
Fig. 15 is a schematic diagram showing the details of the method for attaching a battery table to the third battery table and showing a coupling relationship among a clamp bar, a battery support bolt and the battery module, wherein the left-hand side shows a state in which the battery module has been cramped, and the right-hand side shows an end of the clamp bar and a connecting part of the battery support bolt in a disassembled state.
Fig. 16 is a schematic diagram showing the details of the method for attaching a battery table to the third battery table and showing a state in which the battery module has been positioned and held by ribs provided on the bottom of a central plate of the third battery table.
Fig. 17 is a schematic diagram showing the mounting of the completed battery storage structure on the rear frame of the vehicle rear part, which is a state just before the battery storage structure is mounted on the base frame of the rear frame.
Fig. 18 is a schematic diagram showing the mounting of the completed battery storage structure on the rear frame of the vehicle rear part, which is a state in which the battery storage structure has been mounted on the base frame.
Fig. 19 is a schematic diagram showing a state just before the rear frame loaded with the battery storage structure is mounted on the swing frame (main frame) of the vehicle main body.
Fig. 20 is a schematic diagram showing a state in which the rear frame has been mounted on the swing frame (main frame) of the vehicle main body.
Fig. 21 is a schematic diagram magnifying a connecting part between the rear frame and the swing frame (main frame) using positioning pins and a bolt.
Fig. 22 is a schematic diagram showing the mounting of the rear frame that is loaded with the battery storage structure, on the swing frame using a crane.
Fig. 23 is a schematic diagram showing the mounting of the rear frame that is loaded with the battery storage structure, on the swing frame using a forklift.
Fig. 24 is a schematic diagram showing a driving/cooling system of the hydraulic shovel.

### Mode for Carrying out the Invention

In the following, an embodiment of an electric construction machine in accordance with the present invention will be described in detail with reference to the accompanying drawings, by illustrating a case where the present invention is applied to a hydraulic shovel.

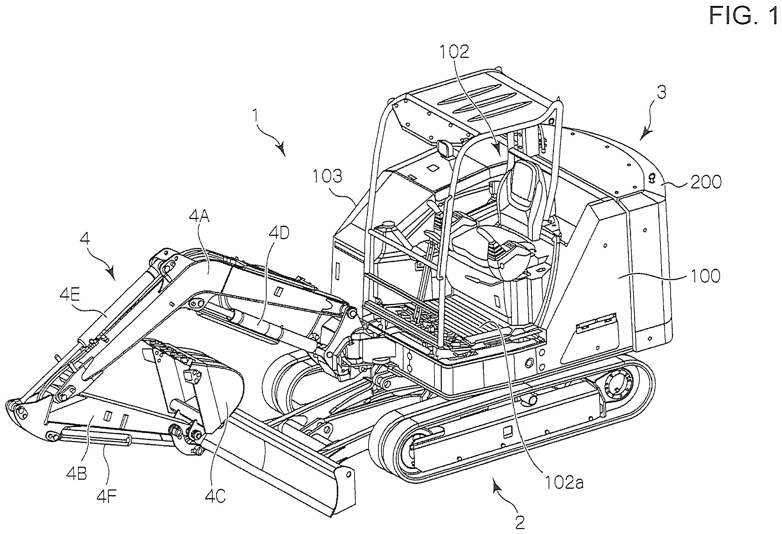

Fig. 1 is a perspective view showing the external appearance of an electric hydraulic shovel in accordance with this embodiment.

The reference character 1 in Fig. 1 represents the electric hydraulic shovel. The hydraulic shovel 1 comprises a lower travel structure 2 of the crawler type capable of traveling by itself, an upper swing structure 3 mounted on the lower travel structure 2 to be capable of swinging, and a work implement 4 of the swinging type attached to the front part of the upper swing structure 3 for performing earth/sand excavation, etc. The vehicle body of the hydraulic shovel 1 is formed by the upper swing structure 3 and the lower travel structure 2. The work implement 4 is made up of a boom 4A, an arm 4B, a bucket 4C, a boom cylinder 4D, an arm cylinder 4E, a bucket cylinder 4F, etc.

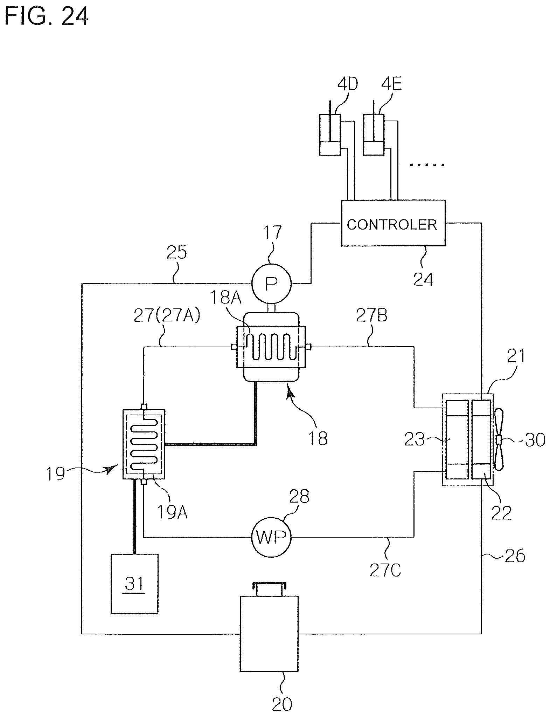

Fig. 24 is a schematic diagram showing a driving/cooling system of the hydraulic shovel 1.

The hydraulic shovel 1 comprises a hydraulic pump 17, an electric motor 18 as a source of power, an inverter 19, an oil tank 20, a heat exchanger 21 including an oil cooler 22 and a radiator 23, a control valve 24, a hydraulic fluid supply line 25, a hydraulic fluid discharge line 26, a coolant line 27 (27A, 27B, 27C), a coolant pump 28, a cooling fan 30, a battery device 31, etc.

The electric motor 18 is powered by the battery device 31 as a power source and controlled by the inverter 19. The inverter 19 is controlled via unshown operating means and controller. The electric motor 18 is connected to the hydraulic pump 17. Being driven by the electric motor 18, the hydraulic pump 17 pumps up the hydraulic fluid from the oil tank 20 via the hydraulic fluid supply line 25 and drives hydraulic actuators such as the boom cylinder 4D, the arm cylinder 4E, the bucket cylinder 4F, a travel hydraulic motor (unshown) and a swing hydraulic motor (unshown) by supplying the hydraulic fluid to the actuators via the control valve 24. The hydraulic fluid returning from each actuator flows back to the oil tank 20 via the control valve 24 and the hydraulic fluid discharge line 26. The hydraulic fluid discharge line 26 is equipped with the oil cooler 22. The oil cooler 22 cools down the hydraulic fluid heated by the hydraulic devices by use of cooling air from the cooling fan 30.

The electric motor 18 and the inverter 19 have cooling jackets 18A and 19A, respectively. A circulatory path for circulating the coolant through the radiator 23, the coolant line 27 (27A, 27B, 27C), the coolant pump 28 and the cooling jackets 18A and 19A is formed. The radiator 23 cools down the coolant heated by the electric motor 18 and the inverter 19 by use of cooling air from the cooling fan 30.

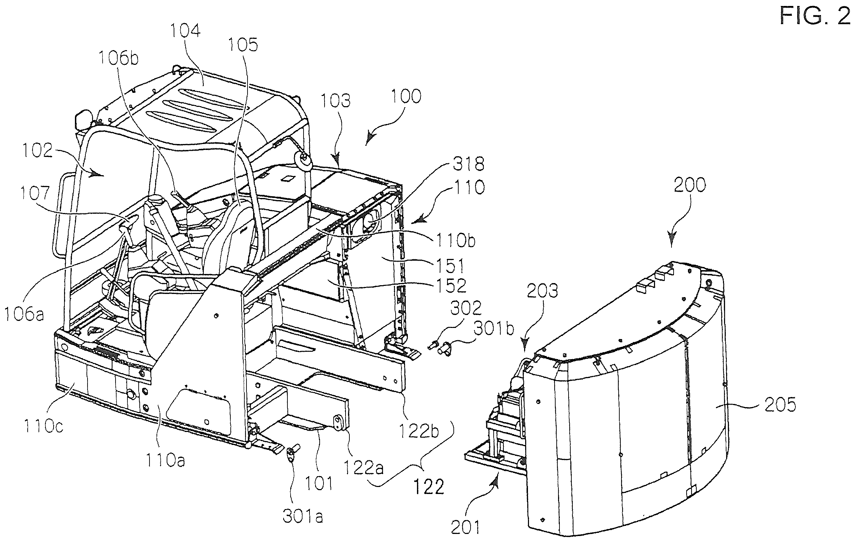

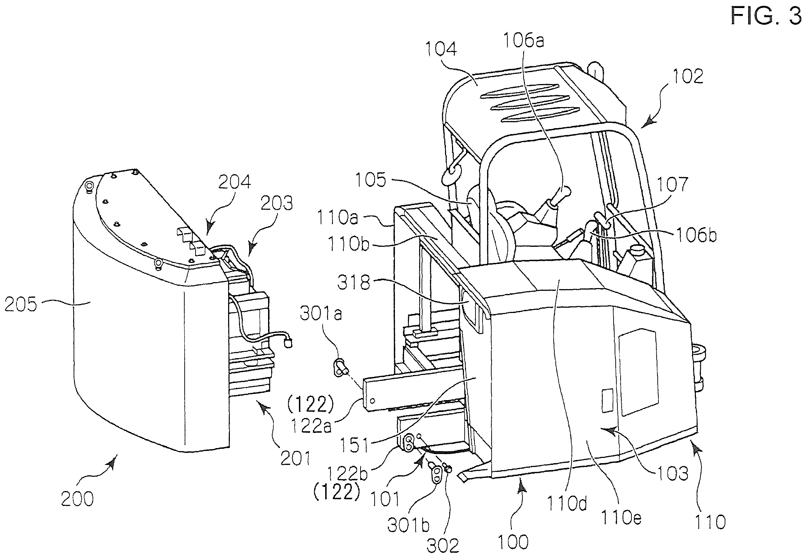

Figs. 2 and 3 are schematic diagrams showing a state in which the upper swing structure 3 of the hydraulic shovel 1 has been separated into a vehicle main body and a vehicle rear part. The upper swing structure 3 in the separated state is viewed from its left side in Fig. 2 and from its right side in Fig. 3. In this description, terms indicating directions (right, left, front, rear, etc.) mean directions from the viewpoint of the operator seated on the cab seat.

Referring to Figs. 1 to 3, the upper swing structure (vehicle body) 3 is made up of a vehicle main body 100 and a vehicle rear part 200.

The vehicle main body 100 includes a swing frame (vehicle frame) 101 to whose front the work implement 4 is attached, and a cab seat 102 (generic name for equipment on which the operator is seated to operate the construction machine) and a machine room 103 which are mounted on the swing frame 101. The cab seat 102 is arranged in a left-hand part of the vehicle main body 100. The machine room 103 is arranged in a right-hand part of the vehicle main body 100 and on the right side of the cab seat 102.

The cab seat 102 is of the canopy type, which is equipped with a canopy 104. The cab seat 102 has a floor panel 102a (see Fig. 1), on which devices/equipment necessary for letting the operator operate the hydraulic shovel 1 are mounted. The devices/equipment include a seat 105 on which the operator is seated, control levers 106a, 106b and 107, etc. The cab seat 102 may also be of the cabin type surrounded with panels and window panes.

The machine room 103 stores the hydraulic pump 17, the electric motor 18, the inverter 19, the oil tank 20, the heat exchanger 21 (the oil cooler 22 and the radiator 23), the cooling fan 30, etc.

Most of the vehicle main body 100 exclusive of the cab seat 102 is covered with an exterior cover 110. The exterior cover 110 is made up of a left cover 110a covering a left rear part of the cab seat 102, a rear cover 110b covering a rear part of the cab seat 102, a floor cover 110c covering a lower front part and a side part of the floor panel 102a of the cab seat 102, and an upper right cover 110d and a right side cover 110e which are arranged on the right side of the cab seat 102 and covering the machine room 103.

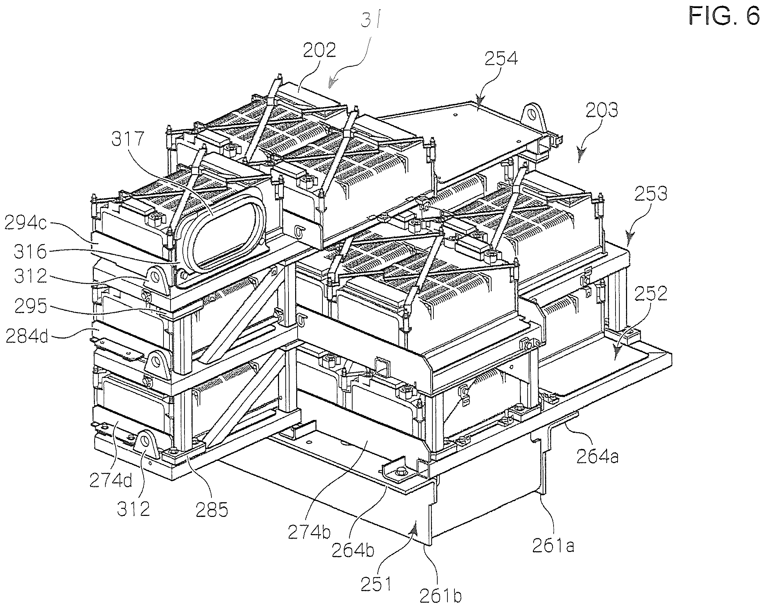

The vehicle rear part 200 includes a rear frame 201, a battery storage structure 203 and a rear cover 205. The rear frame 201 is connected to the swing frame 101 of the vehicle main body 100. The battery storage structure 203 storing the battery device 31 is mounted on the rear frame 201. The rear cover 205 covers the rear frame 201 and the battery storage structure 203 and forms a battery room 204 thereinside together with the left cover 110a and the rear cover 110b of the vehicle main body 100, etc. The rear cover 205 has a shape imitating the counter weight of the conventional engine-driven hydraulic shovels. The vehicle rear part 200 serves also as the counter weight that is generally employed for hydraulic shovels, by use of the weight of the battery storage structure 203, the rear frame 201 and the rear cover 205. The battery device 31 stored in the battery storage structure 203 is formed by electrically connecting a lot of battery modules 202 (see Fig. 6). As shown in Fig. 24, the battery device 31 is electrically connected to the electric motor 18 installed in the machine room 103 and functions as a power supply for driving the electric motor 18. The electric motor 18 can also be driven by the commercial power supply.

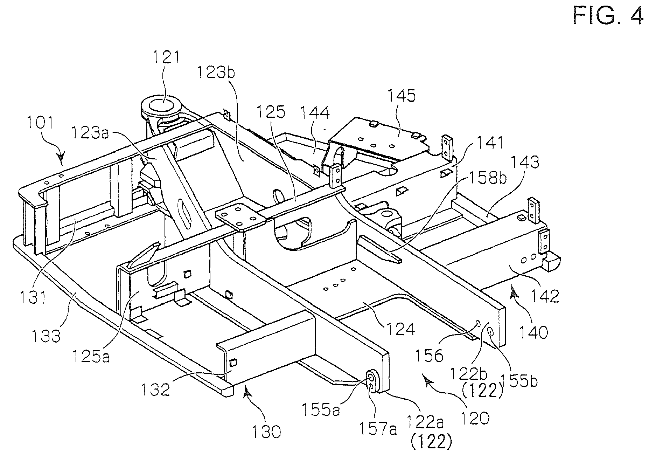

Fig. 4 is a perspective view magnifying the swing frame 101 of the vehicle main body 100.

The swing frame 101 of the vehicle main body 100 is provided as a vehicle body frame to serve as the base of the upper swing structure 3. As shown in Fig. 4, the swing frame 101 includes a main frame 120, a left side frame 130 and a right side frame 140.

The main frame 120 includes a support bracket 121, longitudinal ribs 122a, 122b, 123a and 123b, a base plate 124, and a transverse plate 125. The work implement 4 is attached to the support bracket 121 provided at the front of the main frame 120. The left and right longitudinal ribs 122a and 122b are provided in a rear part of the main frame 120 to overhang and extend in parallel in the longitudinal direction to reach the underside of the vehicle rear part 200. The longitudinal ribs 123a and 123b are arranged in a front part of the main frame 120 to link the support bracket 121 with the longitudinal ribs 122a and 122b. The base plate 124 is a flat plate-like member attached to the lower ends of the longitudinal ribs 122a, 122b, 123a and 123b. The transverse plate 125 is erected on the base plate 124 to be sandwiched between the front longitudinal ribs (123a, 123b) and the rear longitudinal ribs (122a, 122b) and to extend across the longitudinal ribs. The two longitudinal ribs 122a and 122b form an overhanging part 122. A left part 125a of the transverse plate 125 protrudes and extends to the left side frame 130.

The left side frame 130 includes a left overhang beam 131 overhanging leftward from the front end of the left front longitudinal rib 123a, a left overhang beam 132 overhanging leftward from a central part of the left rear longitudinal rib 122a, and a left frame member 133 connected to the left ends of the left overhang beams 131 and 132 and the left part 125a of the transverse plate 125.

The right side frame 140 includes a right overhang beam 141, in a central part thereof, overhanging rightward from between the right front longitudinal rib 123b and the right rear longitudinal rib 122b, a right overhang beam 142, in a rear part thereof, overhanging rightward from a central part of the right rear longitudinal rib 122b, a right frame member 143 connected to the right ends of the right overhang beam 141 in the central part and the right overhang beam 142 in the rear part, a connection plate member 144 connecting the right front longitudinal rib 123b to the front end of the right frame member 143, and a heat exchanger support table 145 fixed to cross-link the connection plate member 144 with the right overhang beam 141 in the central part.

The floor panel 102a (see Fig. 1) of the cab seat 102 is attached on the front longitudinal ribs 123a and 123b, the transverse plate 125 and the left front overhang beam 131 of the main frame 120. The cab seat 102 is mounted on the floor panel 102a.

Partition plates 151 and 152 joined with each other in an L-shape (see Figs. 2 and 3) are attached to upper ends of the front and rear right longitudinal ribs 123b and 122b and the right rear overhang beam 142 of the main frame 120. The machine room 103 is separated from the cab including the cab seat 102 and from the vehicle rear part 200 (especially, the battery room 204) by the partition plates 151 and 152. Multiple stages of support tables (not shown) are provided on the right overhang beams 141 and 142 in the central and rear parts. The electric motor 18, the inverter 19, the hydraulic pump 17, etc. shown in Fig. 24 are set on the support tables. The oil tank 20 is set on the connection plate member 144. The heat exchanger 21 and the cooling fan 30 are set on the heat exchanger support table 145.

The aforementioned left cover 110a and floor cover 110c are attached to the left frame member 133, the front face of the left overhang beam 131 of the left side frame 130, the left end of the left part 125a of the transverse plate 125 and the left end of the left overhang beam 132. The aforementioned right side cover 110e covering the machine room 103 is attached to the right frame member 143 and the right ends of the right overhang beams 141 and 142 of the right side frame 140.

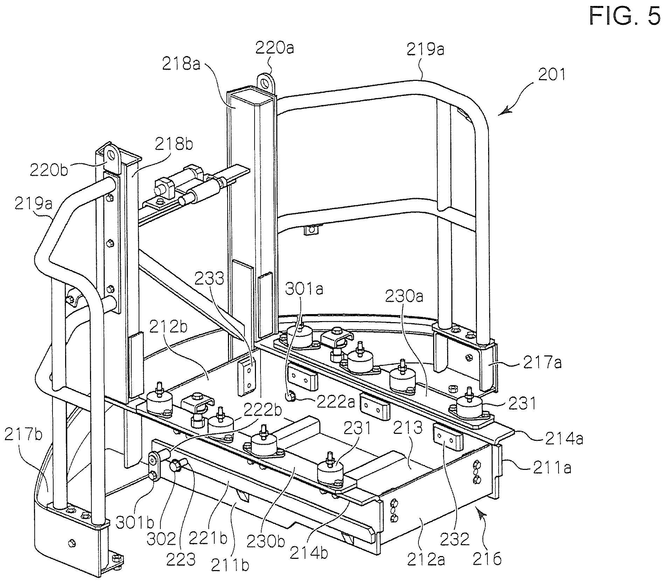

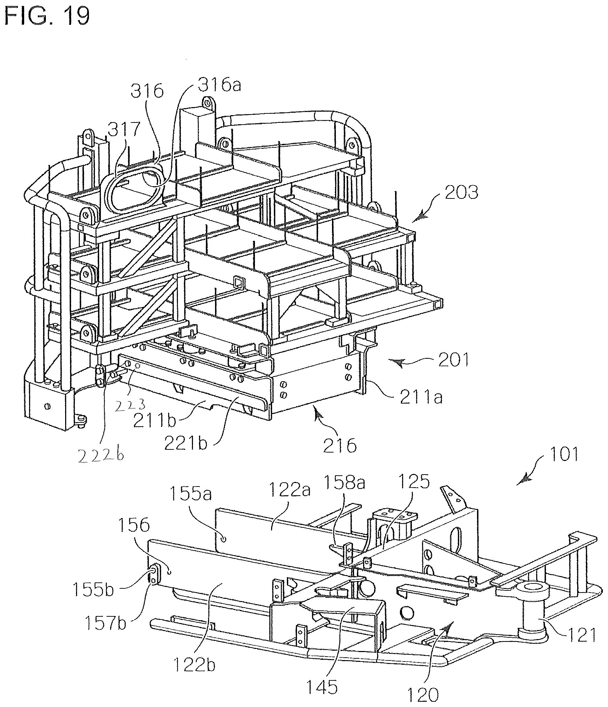

Pin holes 155a and 155b, as through holes for positioning pins 301a and 301b (see Fig. 5, etc.), are formed through lateral surfaces of rear end parts of the rear longitudinal ribs 122a and 122b of the main frame 120. A hole 156, into which a bolt 302 (see Fig. 5, etc.) is inserted, is formed through the lateral surface of the rear end part of the right rear longitudinal rib 122b to adjoin the pin hole 155b. Reinforcing plates 157a and 157b (see Fig. 19, etc.) are attached by welding, etc. to parts of lateral surfaces of the longitudinal ribs 122a and 122b where the pin holes 155a and 155b are formed.

Support plates 158a and 158b (see Fig. 19, etc.) are attached by welding, etc. to front parts of medial surfaces of the longitudinal ribs 122a and 122b to be situated at a prescribed height. The lower surface of the tip (rear end part) of each support plate 158a, 158b is shaped to form a slanted guiding part.

Fig. 5 is a perspective view magnifying the rear frame 201 of the vehicle rear part 200.

The rear frame 201 of the vehicle rear part 200 includes a base frame 216 which couples with the two longitudinal ribs 122a and 122b in the rear part of the vehicle main body 100 from above. The rear frame 201 is configured so that the base frame 216 can be set on the two longitudinal ribs 122a and 122b. The base frame 216 which has been set on the two longitudinal ribs 122a and 122b is fixed to the longitudinal ribs 122a and 122b by using the positioning pins 301a and 301b and the bolt 302. The vehicle rear part 200 can be detached from the vehicle main body 100 by removing the positioning pins 301a and 301b and the bolt 302.

Specifically, the rear frame 201 includes the aforementioned base frame 216, a left outer frame 217a in a curved shape, and a right outer frame 217b in a curved shape.

The base frame 216 is a box-like frame including two side plates 211a and 211b (left side plate 211a, right side plate 211b), a front plate 212a, a rear plate 212b and a base plate 213. The two side plates 211a and 211b, extending in the longitudinal direction of the vehicle rear part 200, are formed so that the base frame 216 can be inserted into the gap between the two longitudinal ribs 122a and 122b in the rear part of the vehicle main body 100. The front plate 212a connects the front ends of the two side plates 211a and 211b. The rear plate 212b connects the rear ends of the two side plates 211a and 211b. The base plate 213 connects the lower ends of the front plate 212a, the rear plate 212b and the side plates 211a and 211b. Horizontal flanges 214a and 214b protruding outward are provided at the upper ends of the side plates 211a and 211b, respectively. The outer frames 217a and 217b are integrally fixed to rear ends of side faces of the base frame 216 (rear ends of lateral surfaces of the side plates 211a and 211b) by welding.

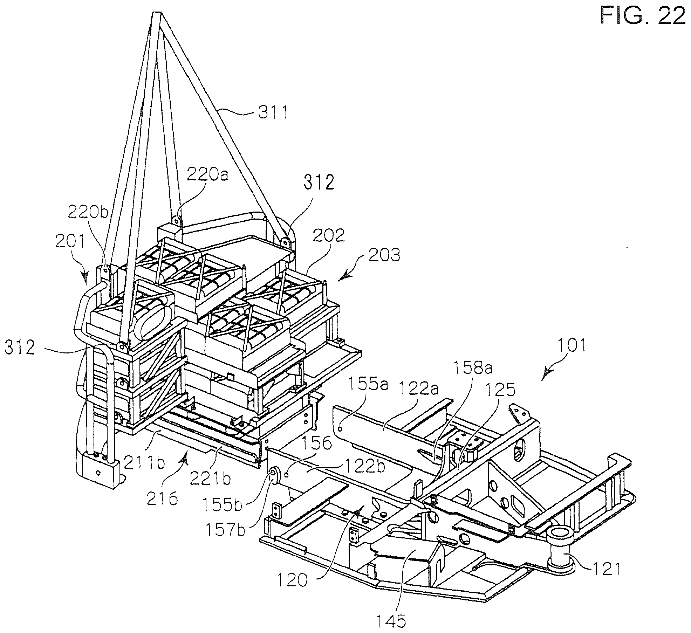

The rear frame 201 further includes two rear posts 218a and 218b and guard pipes 219a and 219b. The rear posts 218a and 218b are integrally fixed to left and right rear ends of the top of the base frame 216 (rear ends of the tops of the horizontal flanges 214a and 214b) by welding. Each guard pipe (219a, 219b) is integrally fixed between the outer frame (217a, 217b) and the rear post (218a, 218b) by welding so as to protect the battery storage structure 203 and the battery device 31 from external shocks. The aforementioned rear cover 205 is attached and fixed to the curved outer frames 217a and 217b and the rear posts 218a and 218b with bolts. Upper ends of the two rear posts 218a and 218b are equipped with wire attaching parts 220a and 220b, to which wires 311 (see Fig. 22) used for pulling up the rear frame 201 with a crane are attached.

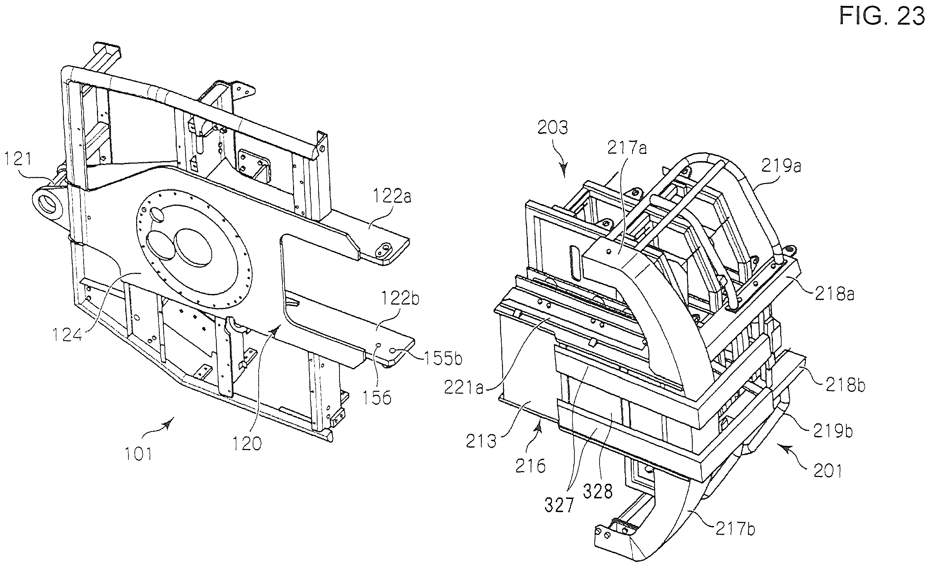

Insertion support plates 221a and 221b (see Fig. 23, etc.) are fixed by welding to the lateral surfaces of the side plates 211a and 211b of the base frame 216, respectively. Pin holes 222a and 222b, as through holes for the positioning pins 301a and 301b, are formed through the lateral surfaces of the rear parts of the insertion support plates 221a and 221b and the side plates 211a and 211b. A tapped bolt hole 223, into which the bolt 302 is inserted, is formed through the lateral surface of the rear part of the right side plate 211b to adjoin the pin hole 222b.

The rear frame 201 is put on the longitudinal ribs 122a and 122b of the main frame 120 of the vehicle main body 100 by making the horizontal flanges 214a and 214b of the base frame 216 be supported on the upper ends of the longitudinal ribs 122a and 122b of the main frame 120. Subsequently, the side plates 211a and 211b of the rear frame 201 are gradually inserted into the main frame 120, by which the insertion support plates 221a and 221b that are attached to the lateral surfaces of the side plates 211a and 211b, slide along and under the support plates 158a and 158b that are attached to the medial surfaces of the longitudinal ribs 122a and 122b, with upper surfaces of the tips of the insertion support plates 221a and 221b sliding along the slanted guiding parts of the support plates 158a and 158b. After the side plates 211a and 211b of the rear frame 201 have been inserted in the main frame 120, the movement of the rear frame 201 in the vertical direction is restricted.

The side plates 211a and 211b of the rear frame 201 are connected and integrated with the swing frame 101 of the vehicle main body 100 by inserting the positioning pins 301a and 301b into the pin holes 155a and 155b of the longitudinal ribs 122a and 122b and the pin holes 222a and 222b of the side plates 211a and 211b, inserting the bolt 302 into the hole 156 of the longitudinal rib 122b and the bolt hole 223 of the side plate 211b, and tightening up the bolt 302. In this state, the movement of the rear frame 201 in the vertical and longitudinal directions is restricted by the positioning pins 301a and 301b and the movement of the rear frame 201 in the transverse direction is restricted by the bolt 302.

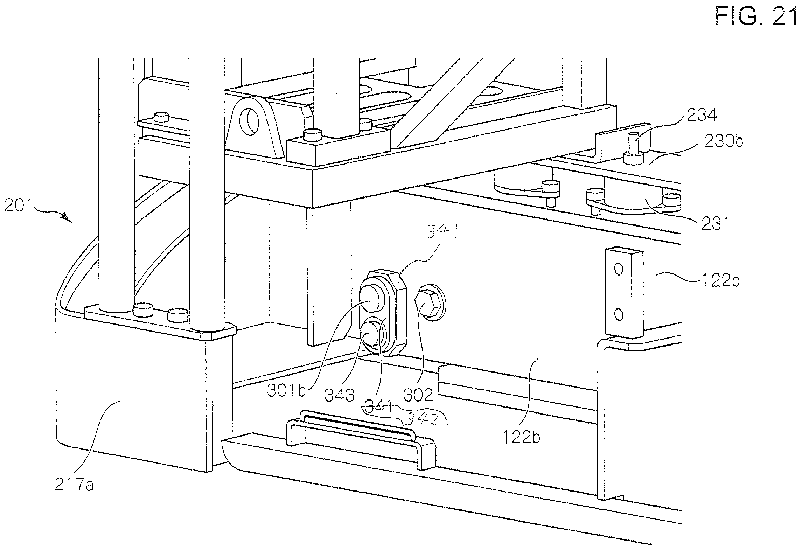

As shown in Fig. 21, a reinforcing plate 341 is attached to a part of the longitudinal rib 122b of the main frame 120 where the pin hole 155b for the positioning pin 301b is formed. The positioning pin 301b is inserted into the longitudinal rib 122b via the reinforcing plate 341. The positioning pin 301b has a lock plate 342 at its top. By fixing the lock plate 342 to the reinforcing plate 341 with a bolt 343, the positioning pin 301b is firmly fixed to the longitudinal rib 122b of the main frame 120 and securely prevented from coming off. The same goes for the positioning pin 301a on the left side unshown in Fig. 21.

The rear frame 201 has a plurality of mount rubbers 231 (four mount rubbers 231 for each side plate 211a, 211b in the illustrated example), a plurality of guide plates 232 (three guide plates 232 for each side plate 211a, 211b in the illustrated example), and a plurality of guide plates 233 (two guide plates 233 for each of the front and rear plates 212a and 212b in the illustrated example). The mount rubbers 231 are attached to the horizontal flange 214a, 214b of each side plate 211a, 211b of the base frame 216 via a reinforcing plate 230a, 230b at prescribed intervals in the longitudinal direction. The guide plates 232 are attached to the medial surface of each of the side plates 211a and 211b at prescribed intervals in the longitudinal direction. The guide plates 233 are attached to the medial surface of each of the front and rear plates 212a and 212b of the base frame 216 at prescribed intervals in the transverse direction.

Each mount rubber 231 is a rubber member in a cylindrical shape. A mount bolt 234 that is attached to the horizontal flange 214a, 214b and the reinforcing plate 230a, 230b, penetrates and protrudes from the center of the mount rubber 231. The battery storage structure 203 is mounted on the base frame 216 via the reinforcing plates 230a and 230b and the mount rubbers 231 and fixed to the base frame 216 by attaching nuts to the mount bolts 234. In the state in which the battery storage structure 203 has been attached on the base frame 216, the mount rubbers 231 serve as antivibration rubbers for preventing vibrations of the battery storage structure 203 and the battery device 31 in the vertical direction.

In the state in which the battery storage structure 203 has been mounted on the base frame 216, part of the battery storage structure 203 is accommodated in the space inside the base frame 216 (explained later). When the mount rubbers 231 prevent the vibrations of the battery storage structure 203 and the battery device 31 in the vertical direction in the state in which part of the battery storage structure 203 has been accommodated in the space inside the base frame 216, the guide plates 232 which are attached to the medial surfaces of the two side plates 211a and 211b at prescribed intervals and the guide plates 233 which are attached to the medial surfaces of the front and rear plates 212a and 212b at prescribed intervals, serve to stabilize the antivibration function of the mount rubbers 231, by fixing the positions of the battery storage structure 203 and the battery device 31 in the longitudinal and transverse directions while allowing the vibration of the battery storage structure 203 and the battery device 31 in the vertical direction. The guide plates 232 and 233 are formed of, for example, self-lubricating plastic material or rubber material that has undergone surface processing for surface lubrication.

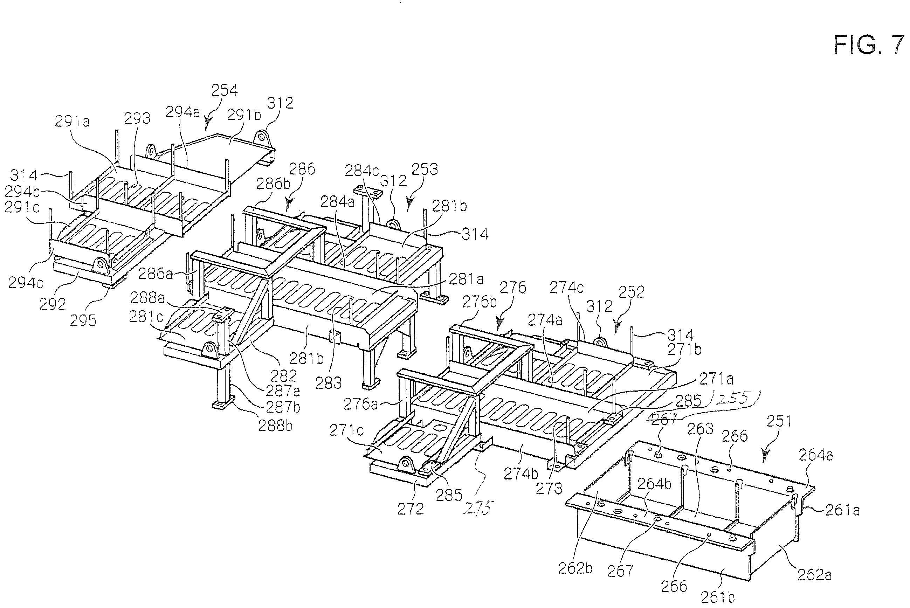

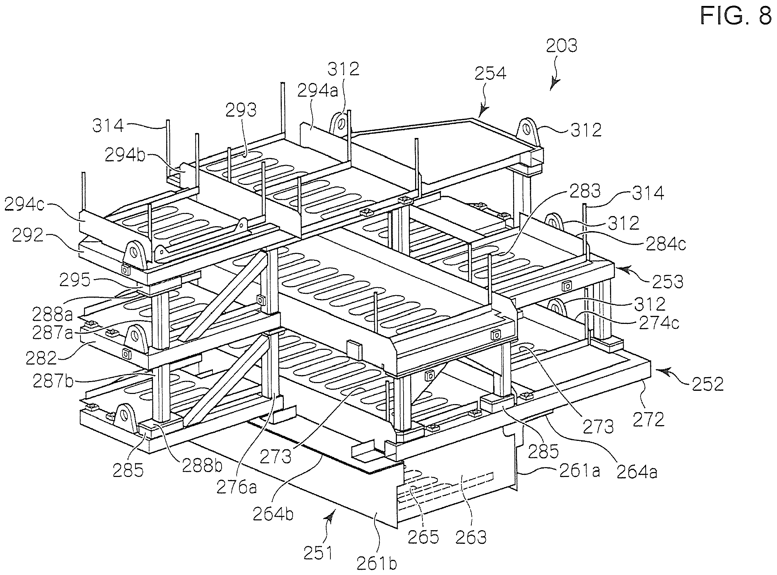

Fig. 6 is a perspective view of the battery storage structure 203 on which the battery device 31 has been mounted. Fig. 7 is an exploded perspective view of the battery storage structure 203. Fig. 8 is a perspective view of the battery storage structure 203.

The battery storage structure 203 includes a battery table mount 251 mounted on the base frame 216 and multiple stages (three stages in the illustrated example) of battery tables 252, 253 and 254 mounted on the battery table mount 251. A plurality of battery modules 202 are set in the battery table mount 251 and on the battery tables 252, 253 and 254. The battery table 252, as the lowermost one of the multiple stages of battery tables 252, 253 and 254, is fixed on the battery table mount 251 with bolts. The multiple stages of battery tables 252, 253 and 254 are supported to be separate from each other in the vertical direction via posts 276a, 286a, 287a and 287b (explained later). The upper and lower ends of each post 276a, 286a, 287a, 287b are fixed to corresponding battery tables with bolts.

Specifically, the battery table mount 251, having a box-like shape similar to the base frame 216, includes a left side plate 261a, a right side plate 261b, a front plate 262a, a rear plate 262b and a base plate 263. The left and right side plates 261a and 261b are provided with horizontal flanges 264a and 264b protruding outward. However, the size of the box-shaped battery table mount 251 is set one step smaller than that of the box-shaped base frame 216 so that the side plates 261a and 261b and the front and rear plates 262a and 262b of the battery table mount 251 can be inserted into the space inside the side plates 211a and 211b and the front and rear plates 212a and 212b of the base frame 216 while being pressed and guided by the guide plates 232 and 233. The base plate 263 has a plurality of vent holes 265 for forming an upward air flow for cooling the battery modules 202.

Each horizontal flange 264a, 264b of the battery table mount 251 has a plurality of (four in the illustrated example) bolt holes 266, into which the mount bolts 234 penetrating the mount rubbers 231 of the horizontal flange 214a, 214b of the base frame 216 are inserted. Each horizontal flange 264a, 264b further has a plurality of (three in the illustrated example) tapped bolt holes 267.

The battery table 252 as the lowermost stage (first stage) includes a central plate 271a extending in the longitudinal direction, a left side plate 271b situated to the left of the central plate 271a and having substantially the same length as the central plate 271a, a right side plate 271c situated to the right rear of the central plate 271a and being shorter than the central plate 271a, and a framing member 272 supporting these plates and forming the exterior frame of the battery table 252. Each plate has a plurality of vent holes 273 for forming an upward air flow for cooling the battery modules 202. The central plate 271a is separated from the left and right side plates 271b and 271c by left partition plate 274a and right partition plate 274b which are erected on each sides of the central plate 271a. Lateral parts of the left and right side plates 271b and 271c are also provided with vertical partition plates 274c and 274d (see Fig. 6, Fig. 8, etc.) for positioning the battery modules 202.

A plurality of mount plates 275, each having a tapped bolt hole, are provided at appropriate positions on the framing member 272.

Further, a post structure 276 having four posts 276a is attached to the rear part of the battery table 252 where the right side plate 271c is situated. The lower ends of the four posts 276a are supported on the top surface of the framing member 272. The lower ends of the posts 276a on the right-hand side are fixed to the right partition plate 274b with bolts, while the lower ends of the posts 276a on the left-hand side are fixed to the left partition plate 274a with bolts. The upper ends of the four posts 276a are connected by a top plate 276b having a plurality of tapped bolt holes.

The lowermost battery table 252 is fixed on the battery table mount 251 by positioning the lowermost battery table 252 on the battery table mount 251 such that after the bolt holes of the mount plates 275 are aligned with the bolt holes 267 of the horizontal flanges 264a and 264b of the battery table mount 251, bolts 255 are inserted into the bolt holes, and the bolts 255 are tightened up.

Similarly to the lowermost (first) battery table 252, the second battery table 253 also includes a central plate 281a, a left side plate 281b, a right side plate 281c, a framing member 282, vent holes 283, partition plates 284a, 284b, 284c and 284d, and a post structure 286 including four posts 286a and a top plate 286b having tapped bolt holes. However, no mount plate is provided on the framing member 282. Instead, the second battery table 253 further includes two additional upper posts 287a erected on the top surface of the framing member 282 and five additional lower posts 287b extending downward from the under surface of the framing member 282. The lower ends of the upper posts 287a are fixed to the top surface of the framing member 282 with bolts, while the upper ends of the lower posts 287b are fixed to the under surface of the framing member 282 with bolts. A mount plate 288a having tapped bolt holes is attached to the upper end of each upper post 287a, while a mount plate 288b having tapped bolt holes is attached to the lower end of each lower post 287b.

The second battery table 253 is fixed on the lowermost battery table 252 by positioning the second battery table 253 on the lowermost battery table 252 such that after the bolt holes of the mount plates 288b of the lower posts 287b are aligned with the bolt holes of the framing member 272 of the lowermost battery table 252 and unshown bolt holes of the left and right side plates 281b and 281c are aligned with the bolt holes of the top plate 276b of the post structure 276 of the lowermost battery table 252, bolts are inserted into the bolt holes, and the bolts are tightened up.

The third battery table 254 has a size and a shape corresponding to the rear part of the lowermost battery table 252 where the right side plate 271c is situated and corresponding to the rear part of the second battery table 253 where the right side plate 281c is situated. The third battery table 254 includes a central plate 291a, a left side plate 291b, a right side plate 291c, a framing member 292, vent holes 293, and partition plates 294a, 294b and 294c. A plurality of mount plates 295, each having a tapped bolt hole, are attached to appropriate parts of the under surface of the framing member 292.

The third battery table 254 is fixed on the second battery table 253 by positioning the third battery table 254 on the second battery table 253 such that after the bolt holes of the mount plates 295 on the under surface of the framing member 292 are aligned with the bolt holes of the mount plates 288a of the upper posts 287a of the second battery table 253 and unshown bolt holes of the left and right side plates 291b and 291c are aligned with the bolt holes of the top plate 286b of the post structure 286 of the second battery table 253, bolts are inserted into the bolt holes, and the bolts are tightened up.

Right and left lateral parts of the framing members 272, 282 and 292 of the first through third battery tables 252, 253 and 254 are equipped with wire attaching parts 312, to which wires 311 (see Fig. 22) for pulling up each battery table with a crane can be attached. Further, a plurality of battery support bolts 314 for fixing the battery modules 202 are erected on appropriate parts of the first through third battery tables 252, 253 and 254.

As shown in Fig. 6, a duct support plate 316 having a duct hole 316a is attached to a front part of the framing member 292 of the third battery table 254 where the right side plate 291c is situated. A duct 317 is connected to the duct hole 316a of the duct support plate 316. The other end of the duct 317 is connected to a duct hole 318 (see Fig. 2) formed through the partition plate 151 of the machine room 103. The duct 317 has a cooling fan (unshown) installed therein. The whole of the battery storage structure 203 storing the battery modules 202 is covered with a flexible sheet (unshown) having a hole formed at a position corresponding to the duct 317. The duct is inserted into the hole of the sheet and the part is sealed up by winding a string thereon. With this configuration, the cooling of the battery modules 202 can be performed efficiently during the operation of the hydraulic shovel 1 by discharging the air which flows upward through the vent holes 265, 273, 283 and 293 of the battery table mount 251 and the first through third battery tables 252, 253 and 254, into the machine room 103 with the cooling fan inside the duct 317 and then out of the machine room 103 to the outside with the cooling fan 30 of the machine room 103.

Fig. 9 is a schematic diagram showing the details of the positional relationship between the battery table mount 251 and the base frame 216 of the rear frame 201 and the details of base structure of the two parts when the battery table mount 251 has been installed in the box-shaped base frame 216. The left-hand side of Fig. 9 is a cutaway view in which front parts of the base frame 216 and the battery table mount 251 have been cut away at a plane extending in the transverse direction. The right-hand side of Fig. 9 is a cutaway view in which right-hand parts of the base frame 216 and the battery table mount 251 have been cut away at a plane extending in the longitudinal direction.

The base plate 263 of the battery table mount 251 has vent holes 265 as mentioned above. The interior surface (upper surface) of the base plate 263 is provided with two ribs 321 for positioning and holding the battery modules 202. The medial surfaces of the side plates 261a and 261b are equipped with battery support bolts 322 for fixing the battery modules 202.

The battery table mount 251 has been attached on the base frame 216 of the rear frame 201 via the mount rubbers 231. In the state in which the battery table mount 251 has been installed in the base frame 216, a prescribed gap (clearance) 325 is formed between the battery table mount 251 and the base frame 216. During the operation of the hydraulic shovel 1, the gap 325 functions as an air intake channel when the air around the battery modules 202 is heated due to the heating of the battery modules 202 and flows upward through the vent holes 265, 273, 283 and 293, by which the cooling of the battery modules 202 can be performed efficiently.

The base plate 213 of the base frame 216 is a two-stage structure including a lower plate 213a and an upper plate 213b. The interior surface (upper surface) of the lower plate 213a is reinforced with two hollow square pipes 213c stretched in the transverse direction. The exterior surface (lower surface) of the lower plate 213a is flat and functions as a support part to be used for setting the vehicle rear part 200 on the forks 327 (see Fig. 23) of a forklift when the vehicle rear part 200 is separated from the vehicle main body 100 using the forklift.

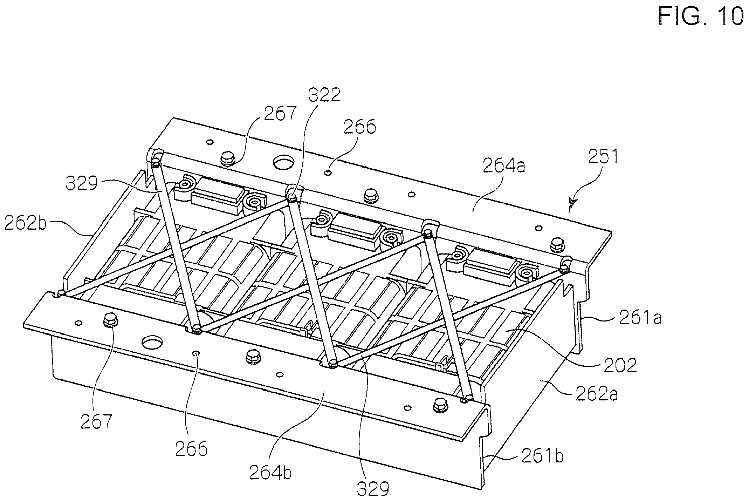

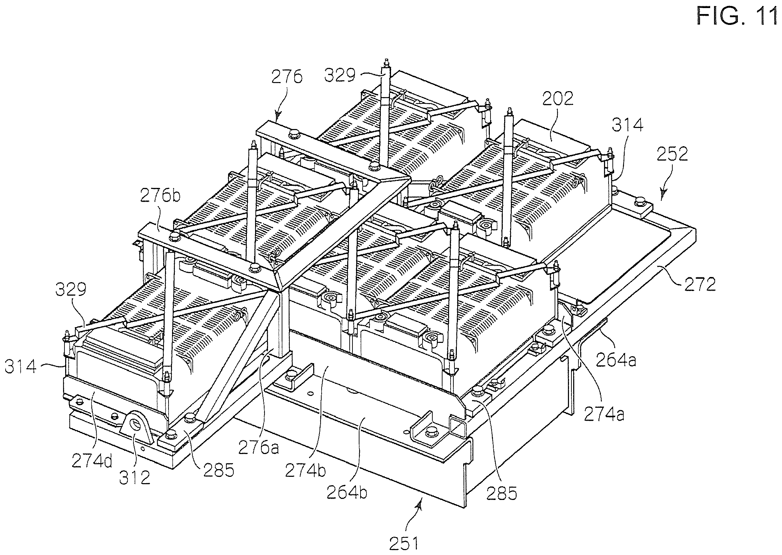

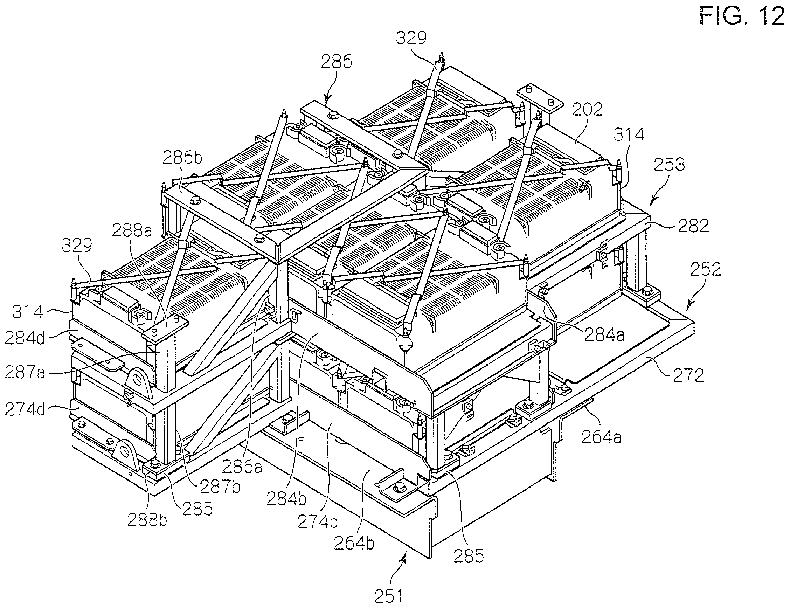

Fig. 10 is a schematic diagram showing a state in which battery modules 202 have been stored in the battery table mount 251. Fig. 11 is a schematic diagram showing a state in which battery modules 202 have been mounted on the lowermost battery table 252 and the loaded battery table 252 has been attached on the battery table mount 251 shown in Fig. 10. Fig. 12 is a schematic diagram showing a state in which battery modules 202 have been mounted on the second battery table 253 and the loaded battery table 253 has been attached on the lowermost battery table 252 shown in Fig. 11. The aforementioned Fig. 6 shows a state in which battery modules 202 have been mounted on the third battery table 254 and the loaded battery table 254 has been attached on the second battery table 253 shown in Fig. 12.

As shown in the figures, the battery support bolts 322 attached to the battery table mount 251 and the battery support bolts 314 attached to the battery tables 252 to 254 are situated at the corners (four corners) of the battery modules 202. Each battery module 202 is held by the battery support bolts 314 or 322 and two clamp bars 329 stretched diagonally with respect to the top surface of the battery module 202. Each end of the clamp bar 329 is attached and fixed to the top of a corresponding battery support bolt 314 or 322.

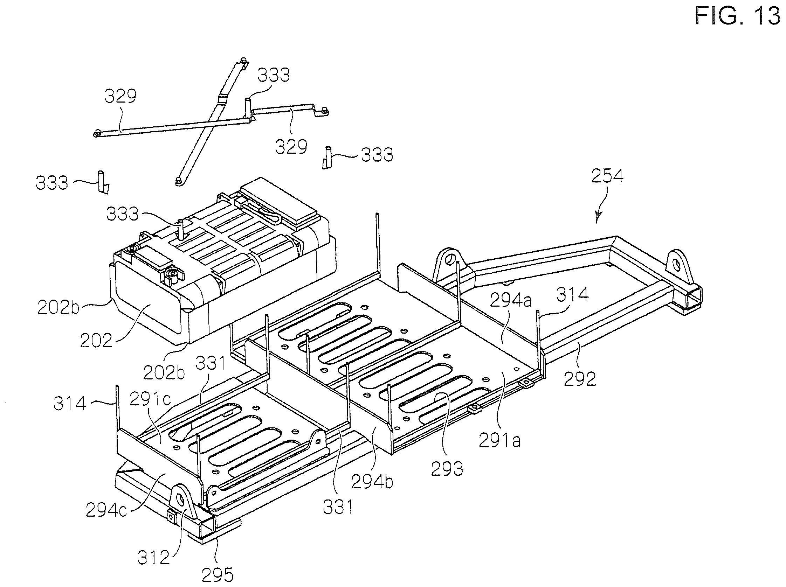

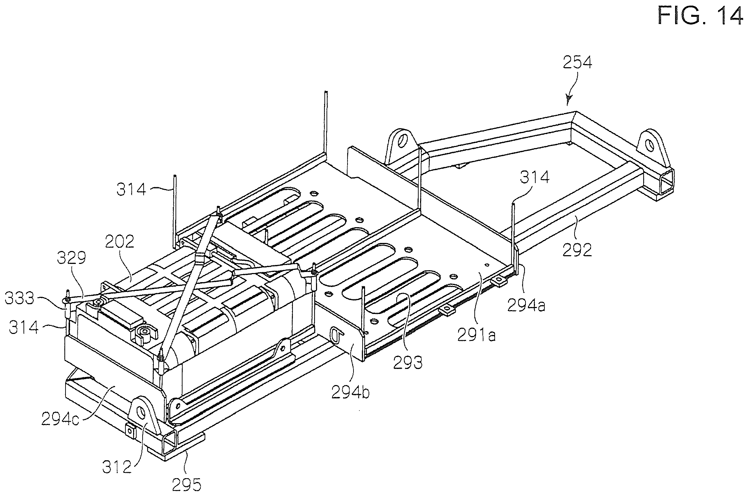

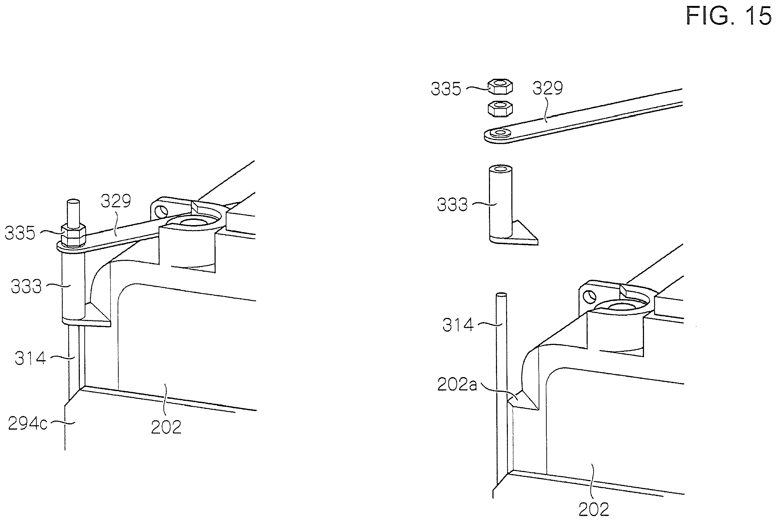

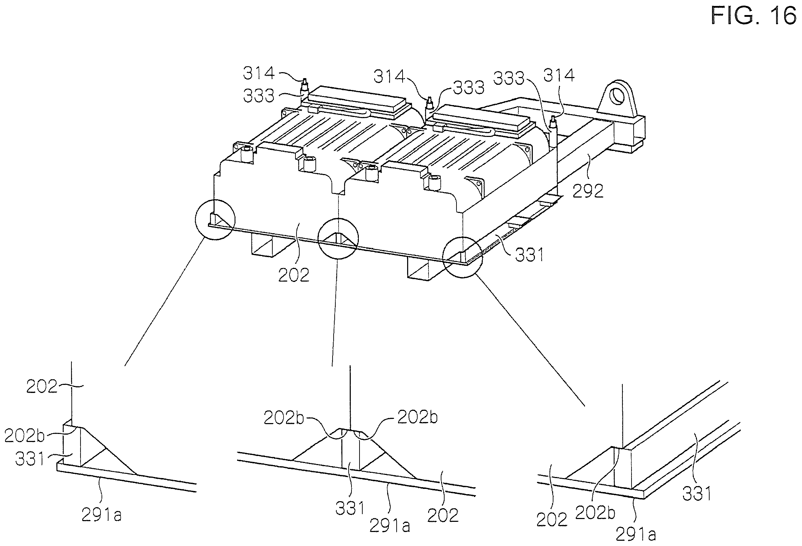

Figs. 13 to 16 are schematic diagrams showing the details of a method for attaching a battery module 202 to the third battery table 254. Specifically, Fig. 13 shows a state in which a battery module 202 has been detached from the right side plate 291c of the third battery table 254. Fig. 14 shows a state in which a battery module 202 has been attached to the right side plate 291c of the third battery table 254. Fig. 15 shows coupling relationship among the clamp bar 329, the battery support bolt 314 and the battery module 202, wherein the left-hand side shows a state in which the battery module 202 has been cramped and the right-hand side shows an end of the clamp bar 329 and a connecting part of the battery support bolt 314 in a disassembled state. Fig. 16 shows a state in which a battery module 202 has been positioned and held by ribs 331 provided on the bottom of the central plate 291a of the third battery table 254.

As shown in Figs. 13 to 15, a bracket 333 is slid onto the battery support bolt 314. At each of the four corners of the battery module 202, a shoulder 202a to be in contact with the bracket 333 is formed. Two ribs 331 (front, rear) are attached to the front and rear of the right side plate 291c to adjoin the framing member 292. Three ribs 331 (front, center, rear) are attached to the front, center and rear of the central plate 291a. On each of the front lower edge and the rear lower edge of the battery module 202, a shoulder 202b (see Fig. 16) to be in contact with the rib 331 is formed.

First, the battery module 202 is set on the right side plate 291c while aligning the shoulders 202b situated on the lower edges of the battery module 202 with the ribs 331 on the right side plate 291c, by which the movement of the battery module 202 in the longitudinal direction is restricted. In this state, the four corners of the battery module 202 are in contact with or in close vicinity of corresponding battery support bolts 314, respectively. Subsequently, the brackets 333 are slid onto the battery support bolts 314, respectively, to let the brackets 333 be supported on the shoulders 202a at the four corners of the battery module 202. Subsequently, the two clamp bars 329 are stretched diagonally on the battery module 202 and the battery support bolts 314 are inserted into holes at the ends of the clamp bars 329 to make the battery support bolts 314 hold and support the two clamp bars 329. The clamp bars 329 serve as supports for preventing the brackets 333 from being detached outward. Subsequently, double lock nuts 335 are screwed onto a threaded part formed at the upper end of each battery support bolt 314 and the lock nuts 335 are tightened up. Consequently, the brackets 333 are pressed against the shoulders 202a at the four corners of the battery module 202 and the movement of the battery module 202 in the vertical direction is restricted. The battery module 202 can be detached by reversely conducting the above steps.

As shown in Fig. 16, two battery modules 202 are mounted on the central plate 291a of the third battery table 254. Also in this case, each battery module 202 can be attached according to the same procedure as the above explanation regarding the attachment of one battery module. In this case where two battery modules 202 are attached, however, two central battery support bolts 314 are shared by the two battery modules 202. Specifically, a bracket (not shown), having a shape fitting with two shoulders 202a at adjoining corners of the two battery modules 202, is slid onto each of the central battery support bolts 314 and the double lock nuts 335 are tightened up, by which the two battery modules 202 are held down together and their vertical movement is restricted.

The mounting of battery modules on the battery table mount 251 can also be conducted similarly by use of the battery support bolts 322, the ribs 321 and the clamp bars 329.

Next, an example of a procedure for assembling the battery storage structure 203 storing the battery device 31 in this embodiment configured as above will be explained below.

First, the battery modules 202 are mounted and fixed on the battery table mount 251, the lowermost battery table 252, the second battery table 253 and the third battery table 254 by the above method explained referring to Figs. 13 to 16.

Subsequently, the battery table mount 251, the lowermost battery table 252, the second battery table 253 and the third battery table 254 are stacked up and fixed one by one by the method explained referring to Fig. 6 and Figs. 10 to 12, by which the battery storage structure 203 storing the battery device 31 is completed.

Thereafter, the completed battery storage structure 203 is mounted and fixed on the rear frame 201 of the vehicle rear part 200.

The stacking of the battery table mount 251 and the battery tables 252 to 254 and the mounting of the battery storage structure 203 on the rear frame 201 can be performed with ease by using a crane and the wires 311 attached to the wire attaching parts 312. The same goes for the detaching of the battery storage structure 203 from the base frame 216 and the separation of the battery table mount 251 and the battery tables 252 to 254.

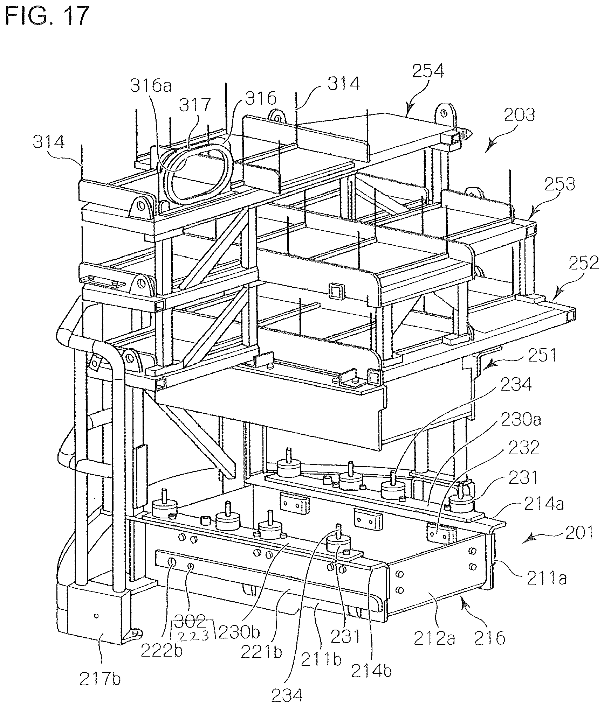

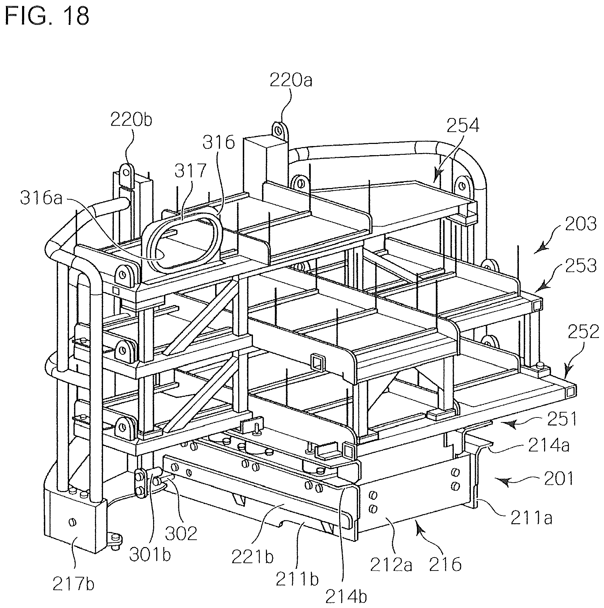

Figs. 17 and 18 are schematic diagrams showing the mounting of the completed battery storage structure 203 on the rear frame 201 of the vehicle rear part 200, wherein Fig. 17 shows a state just before the battery storage structure 203 is mounted on the base frame 216 of the rear frame 201 and Fig. 18 shows a state in which the battery storage structure 203 has been mounted on the base frame 216. In Figs. 17 and 18, the battery modules 202 are unshown for convenience of illustration.

As mentioned above, the mount rubbers 231 have been attached to the horizontal flanges 214a and 214b of the base frame 216 via the reinforcing plates 230a and 230b, with the mount bolts 234 protruding from the mount rubbers 231.

The battery storage structure 203 is mounted on the horizontal flanges 214a and 214b of the base frame 216 by lowering the battery storage structure 203 and inserting the mount bolts 234 of the base frame 216 into bolt holes 256 formed in flange parts 251a and 251b of the battery table mount 251. Then, nuts are attached to the mount bolts 234 and tightened up, by which the battery storage structure 203 is connected and integrated with the base frame 216. Conversely, by loosening and removing the nuts from the mount bolts 234 and lifting the battery storage structure 203, the battery storage structure 203 can be detached from the base frame 216.

Incidentally, instead of completing the battery storage structure 203 and thereafter mounting the completed battery storage structure 203 on the base frame 216 of the rear frame 201 as explained above, it is also possible to complete the battery storage structure 203 on the base frame 216, by successively mounting the battery table mount 251 and the battery tables 252 to 254 on the base frame 216 while attaching the battery modules 202 on each mount/table.

Next, a procedure for mounting and fixing the rear frame 201 that is loaded with the battery storage structure 203 as above, on the vehicle main body 100 will be explained referring to Figs. 19 to 23.

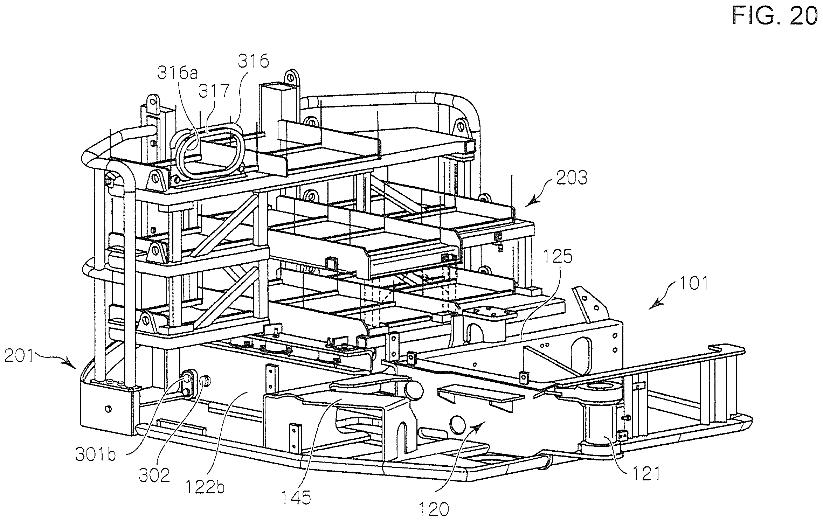

Fig. 19 is a schematic diagram showing a state just before the rear frame 201 loaded with the battery storage structure 203 is mounted on the swing frame 101 (main frame 120) of the vehicle main body 100. Fig. 20 is a schematic diagram showing a state in which the rear frame 201 has been mounted on the swing frame 101 (main frame 120) of the vehicle main body 100. Fig. 21 is a schematic diagram magnifying a connecting part between the rear frame 201 and the swing frame 101 (main frame 120) using the positioning pins 301a and 301b and the bolt 302. In Figs. 19 - 21, the battery modules 202 and parts of the vehicle main body 100 exclusive of the swing frame 101 are unshown for convenience of illustration.

As mentioned above, the pin holes 155a and 155b and the holes 156 have been formed through the longitudinal ribs 122a and 122b of the main frame 120 of the swing frame 101, and the pin holes 222a and 222b and the bolt hole 223 have been formed through the side plates 211a and 211b of the base frame 216 of the rear frame 201. The support plates 158a and 158b each having the guiding part formed by the lower surface of its tip, have been attached to the front parts of the medial surfaces of the longitudinal ribs 122a and 122b, and the insertion support plates 221a and 221b have been attached to the lateral surfaces of the side plates 211a and 211b of the base frame 216.

The rear frame 201 loaded with the battery storage structure 203 is put on the longitudinal ribs 122a and 122b of the main frame 120 of the vehicle main body 100 by lowering the rear frame 201 and making the horizontal flanges 214a and 214b of the base frame 216 be supported on the upper ends of the longitudinal ribs 122a and 122b of the main frame 120. Subsequently, the side plates 211a and 211b of the rear frame 201 are gradually inserted into the main frame 120, by which the insertion support plates 221a and 221b, the plates being attached to the lateral surfaces of the side plates 211a and 211b, slide along and under the support plates 158a and 158b, the plates being attached to the medial surfaces of the longitudinal ribs 122a and 122b, with the upper surfaces of the tips of the insertion support plates 221a and 221b sliding along the slanted guiding parts of the support plates 158a and 158b. After the side plates 211a and 211b of the rear frame 201 have been inserted in the main frame 120, the movement of the rear frame 201 in the vertical direction is restricted.

Subsequently, the positions of the base frame 216 (rear frame 201) and the main frame 120 (vehicle main body 100) are adjusted so that the pin holes 222a and 222b of the side plates 211a and 211b of the base frame 216 are aligned with the pin holes 155a and 155b of the longitudinal ribs 122a and 122b of the main frame 120. Then, the rear frame 201 loaded with the battery storage structure 203 is connected and integrated with the swing frame 101 of the vehicle main body 100 by inserting the positioning pins 301a and 301b into the pin holes 155a and 155b and the pin holes 222a and 222b, inserting the bolt 302 into the hole 156 and the bolt hole 223, and tightening up the bolt 302. In this state, the movement of the rear frame 201 in the vertical and longitudinal directions is restricted by the positioning pins 301a and 301b, and the movement of the rear frame 201 in the transverse direction is restricted by the bolt 302.

The mounting of the rear frame 201 on the swing frame 101 can be conducted with ease by attaching the wires 311 (see Fig. 22) to some wire attaching parts selected from the wire attaching parts 220a and 220b at the upper ends of the rear posts 218a and 218b and the wire attaching parts 312 of the battery tables 252 to 254 of the battery storage structure 203 (e.g., the wire attaching parts 220a and 220b of the rear posts 218a and 218b and the wire attaching parts 312 of the uppermost battery table 254) and pulling up the wires 311 using a crane.

Fig. 22 is a schematic diagram showing the mounting, on the swing frame 101 using a crane, of the rear frame 201 that is loaded with the battery storage structure 203. Since the rear posts 218a and 218b of the rear frame 201 and the battery storage structure 203 in this embodiment are equipped with the wire attaching parts 220a, 220b and 312 as shown in Fig. 22, the mounting of the rear frame 201 can be conduct with ease by attaching the wires 311 to arbitrarily selected wire attaching parts 220a, 220b, 312 and pulling up the wires 311 using a crane. The same goes for the detaching of the rear frame 201 from the swing frame 101.

Fig. 23 is a schematic diagram showing the mounting, on the swing frame 101 using a forklift, of the rear frame 201 that is loaded with the battery storage structure 203. Since the support part 328 to be used for setting the rear frame 201 on the forks 327 of a forklift is provided on the lower surface of the base frame 216 (lower surface of the lower plate 213a of the base plate 213) and between the longitudinal ribs 122a and 122b of the swing frame 101 in this embodiment as shown in Fig. 23, the mounting of the rear frame 201 can be conduct with ease also by using a forklift. The same goes for the detaching of the rear frame 201 from the swing frame 101.

The rear cover 205 may either be attached immediately after the completion of the battery storage structure 203 or after mounting and fixing the rear frame on the swing frame.

By this embodiment configured as above, the following effects are achieved:
1. The upper swing structure 3 as the vehicle body of the hydraulic shovel 1 is made up of the vehicle main body 100 and the vehicle rear part 200, and the hydraulic shovel 1 is configured so that the vehicle rear part 200 is detachable from the vehicle main body 100 by removing the positioning pins 301a and 301b and the bolt 302. Therefore, the replacement of the vehicle rear part 200 is facilitated. Even when the electric hydraulic shovel 1 is used for operations for a long time at a place where no commercial power supply is available, the battery device 31 can be replaced easily and quickly and the working efficiency can be increased by preparing another vehicle rear part 200 loaded with a recharged battery device 31, detaching the already-attached vehicle rear part 200 from the vehicle main body 100 when the electricity amount of the battery device 31 on the vehicle rear part 200 has become insufficient, and attaching, to the vehicle main body 100, the prepared vehicle rear part 200 loaded with the recharged battery device 31.
2. The maintenance of the battery device 31 can also be done with ease, by replacing the vehicle rear part 200 with another vehicle rear part 200 loaded with a recharged battery device 31 and moving the detached vehicle rear part 200 to maintenance facilities.
3. When a battery device 31 of a different type has to be mounted, the vehicle rear part 200 loaded with the currently used battery device 31 is detached from the vehicle main body 100 and another vehicle rear part 200 loaded with the battery device 31 of the different type is attached to the vehicle main body 100. Therefore, the battery device 31 can easily be replaced with different types of battery devices according to the progress of the battery technology.
4. The rear frame 201 of the vehicle rear part 200 can be formed in various shapes differing in the length in the longitudinal direction, by which the number of the mounted batteries can be changed and adjusted to suit the operating time required of the electric hydraulic shovel.
5. The battery room 204 is formed inside the rear cover 205. Therefore, the battery device 31 can be protected from shocks from the outside during the swing of the upper swing structure 3 (vehicle body). By forming the vehicle rear part 200 in a shape imitating the counter weight, an external appearance having innovativeness can be given to the electric hydraulic shovel.
6. The two longitudinal ribs 122a and 122b overhanging and extending to the underside of the vehicle rear part 200 are provided in the rear part of the main frame 120 of the vehicle main body 100. The rear frame 201 of the vehicle rear part 200 is equipped with the base frame 216 which couples with the two longitudinal ribs 122a and 122b of the main frame 120 from above. The base frame 216 mounted on the two longitudinal ribs 122a and 122b of the main frame 120 is fixed on the two longitudinal ribs 122a and 122b. Therefore, the movement of the rear frame 201 in the transverse direction is restricted by the base frame 216 and the two longitudinal ribs 122a and 122b of the main frame 120. Consequently, the vehicle rear part 200 can be held and fixed stably with respect to the vehicle main body 100.
7. The base frame 216 mounted on the two longitudinal ribs 122a and 122b of the main frame 120 is fixed on the two longitudinal ribs 122a and 122b and prevented from coming off using the positioning pins 301a and 301b and the bolt 302. The whole of the vehicle rear part 200 is detachable from the two longitudinal ribs 122a and 122b by removing the positioning pins 301a and 301b and the bolt 302. Therefore, the whole of the vehicle rear part 200 can be attached to and detached from the vehicle main body 100 with ease while leaving the battery device 31 mounted on the vehicle rear part 200.
8. The rear frame 201 is mounted on the two longitudinal ribs 122a and 122b of the main frame 120 by making the horizontal flanges 214a and 214b of the base frame 216 be supported on the upper ends of the two longitudinal ribs 122a and 122b. Therefore, the movement of the rear frame 201 in the transverse direction is restricted by the two side plates 211a and 211b of the base frame 216 and the two longitudinal ribs 122a and 122b of the main frame 120, and the movement of the rear frame 201 in the vertical direction is restricted by the horizontal flanges 214a and 214b of the base frame 216 and the two longitudinal ribs 122a and 122b of the main frame 120. Consequently, the vehicle rear part 200 can be stably fixed to the vehicle main body 100.
9. The support part to be used for setting the vehicle rear part 200 on the forks 327 of a forklift is provided on the lower surface of the base frame 216 (lower surface of the lower plate 213a of the base plate 213) and between the two longitudinal ribs 122a and 122b of the main frame 120. The vehicle rear part 200 is movable with respect to the vehicle main body 100 using the forklift. Therefore, the vehicle rear part 200 can be replaced safely by use of a forklift even when the vehicle rear part 200 loaded with the battery device 31 is heavy.
10. The vehicle rear part 200 and the battery storage structure 203 are equipped with the wire attaching parts 220a, 220b and 312. The vehicle rear part 200 is movable with respect to the vehicle main body 100 using a crane. Therefore, the vehicle rear part 200 can be replaced safely by use of a crane even when the vehicle rear part 200 loaded with the battery storage structure 203 is heavy.
11. The base frame 216 is provided with a plurality of mount rubbers 231. The battery storage structure 203 is attached on the base frame 216 with the mount bolts 234 via the mount rubbers 231. Therefore, vertical vibrations of the battery storage structure 203 and the battery device 31 during the operation of the hydraulic shovel 1 are absorbed, by which the battery device 31 and the battery storage structure 203 can be protected from vertical operating vibrations of the hydraulic shovel 1.
12. By standardizing the lowermost attaching part of the battery storage structure 203 (i.e., the battery table mount 251), it becomes possible to mount various types of battery storage structures differing in the configuration. Consequently, various types of batteries can easily be mounted according to the progress of the battery technology.
13. The battery storage structure 203 is equipped with a plurality of wire attaching parts 312. The battery storage structure 203 is movable in the vertical direction with respect to the base frame 216 by using a crane. Therefore, the battery storage structure 203 can be replaced safely by use of a crane even when the battery storage structure 203 loaded with the battery device 31 is heavy.
14. The battery storage structure 203 is made up of the battery table mount 251 and multiple stages of battery tables 252 to 254. The battery table mount 251 and the multiple stages of battery tables 252 to 254 are supported and fixed to be separate from each other in the vertical direction via the posts 276a, 286a, 287a and 287b. Therefore, a lot of battery modules can be mounted and the attaching/detaching of the battery modules can be conducted safely and easily.
15. The rear cover 205 of the vehicle rear part 200 covers a rear part, a right-hand part, a left-hand part and a top part of the vehicle rear part 200. The machine room 103 is separated from the other parts of the vehicle main body 100 by the partition plates 151 and 152. When the vehicle rear part 200 is connected with the vehicle main body 100, the battery room 204 is insulated by the partition plates 151 and 152 from heat sources such as the electric motor 18, the inverter 19, etc., in the machine room 103 and a space preventing effects of heat on the battery modules 202 of the battery device 31 arranged in the battery room 204 is secured. Therefore, the temperature rise as a cause of deterioration of the battery device 31 can be prevented.

Incidentally, while the overhanging part 122 of the main frame 120 is formed by the two longitudinal ribs 122a and 122b in the above embodiment, the overhanging part 122 may be configured differently as long as the structure of the overhanging part 122 can support the base frame 216 of the vehicle rear part 200. For example, the overhanging part 122 can be a frame structure having a part supporting the base frame 216. The overhanging part 122 may also be formed of three longitudinal ribs including a third longitudinal rib that supports the central part of the base frame 216. The base frame 216 in the above embodiment includes the two side plates 211a and 211b to be arranged inside the two longitudinal ribs 122a and 122b of the main frame 120, the base plate 213 connecting the lower ends of the two side plates 211a and 211b, and the outward horizontal flanges 214a and 214b provided at the upper ends of the two side plates 211a and 211b, respectively, and the rear frame 201 is mounted on the two longitudinal ribs 122a and 122b by making the horizontal flanges 214a and 214b be supported on the upper ends of the two longitudinal ribs 122a and 122b. However, the present invention is not to be restricted to this configuration. For example, the base frame 216 may include two side plates to be arranged outside the two longitudinal ribs 122a and 122b of the main frame 120 and a top plate connecting the upper ends of the side plates, and the rear frame 201 may be mounted on the two longitudinal ribs 122a and 122b by making the top plate be supported on the upper ends of the two longitudinal ribs 122a and 122b.

Further, while the battery storage structure 203 in the above embodiment includes the battery table mount 251 and the battery tables 252 to 254, the number of stages of the battery tables 252 to 254 may be changed properly, depending on the number of batteries to be mounted. The configuration of the battery tables 252 to 254 may also be changed properly, depending on the type of the battery device to be mounted.

Furthermore, while the hydraulic shovel 1 has been illustrated in the above embodiment as an example of the electric construction machine, the present invention is not to be restricted to hydraulic shovels; the present invention is applicable also to a wide range of other construction machines such as wheel loaders, hydraulic cranes, etc.

### Description of Reference Characters

- 1: electric hydraulic shovel
- 2: lower travel structure (vehicle body)
- 3: upper swing structure (vehicle body)
- 4: work implement
- 17: hydraulic pump
- 18: electric motor
- 19: inverter
- 20: oil tank
- 22: oil cooler
- 23: radiator
- 30: cooling fan
- 31: battery device
- 100: vehicle main body
- 101: swing frame (vehicle body frame)
- 102: cab seat
- 103: machine room
- 104: canopy
- 110: exterior cover
- 120: main frame
- 130, 140: side frame
- 122a, 122b: longitudinal rib
- 151, 152: partition plate
- 200: vehicle rear part
- 201: rear frame
- 202: battery module
- 203: battery storage structure
- 204: battery room
- 205: rear cover
- 211a, 211b: side plate
- 212a: front plate
- 212b: rear plate
- 213: base plate
- 214a, 214b: horizontal flange
- 216: base frame
- 217a, 217b: outer frame
- 218a, 218b: post
- 219a, 219b: guard pipe
- 220a, 220b: wire attaching part
- 231: mount rubber
- 232, 233: guide plate
- 234: mount bolt
- 251: battery table mount
- 252: first (lowermost) battery table
- 253: second battery table
- 254: third battery table
- 261a, 261b: side plate
- 262a: front plate
- 262b: rear plate
- 263: base plate
- 264a, 264b: horizontal flange
- 265, 273, 283, 293: vent hole
- 276a,286a, 287a, 287b: post
- 301a,301b: positioning pin
- 302: bolt
- 311: wire
- 312: wire attaching part
- 314, 322: battery support bolt
- 321, 331: rib
- 327: forks of a forklift
- 329: clamp bar

## Claims

1. An electric construction machine having a battery device (31) mounted on a rear part of a vehicle body (3), the electric construction machine performing operations by driving an electric motor (18) with the battery device,
wherein the vehicle body (3) is made up of a vehicle main body (100) and a vehicle rear part (200), wherein the vehicle main body (100) includes a vehicle body frame (101) to whose front a work implement (4) is attached and a cab seat (102) and a machine room (103), the cab seat and the machine room (103) being provided on the vehicle body frame (101), and an exterior cover (110) that covers the vehicle main body (100) exclusive of the cab seat (102), wherein the vehicle body frame (101) includes a main frame (120) to whose front the work implement (4) is attached, wherein the main frame (120) has an overhanging part (122) overhanging and extending in a longitudinal direction to reach the underside of the vehicle rear part (200), wherein the vehicle rear part (200) includes a rear frame (201) to be mounted on the overhanging part and a rear cover (205) covering the rear frame (201), the rear cover (205) having the battery device (31) arranged therein and having a shape imitating a counter weight, wherein the rear frame (201) mounted on the overhanging part (122) is fixed on the overhanging part (122) using a bolt (302) and is detachable from the overhanging part (122) by removing the bolt (302), **characterized in that**
the overhanging part (122) of the main frame (120) of the vehicle main body (100) includes two longitudinal ribs (122a, 122b) overhanging and extending in parallel in the longitudinal direction from inside of the vehicle main body (100) to reach the underside of the rear frame (201) of the vehicle rear part (200), wherein the rear frame (201) of the vehicle rear part (200) includes a base frame (216) which couples with the two longitudinal ribs (122a, 122b) of the main frame (120) from above and to slide along the two longitudinal ribs (122a, 122b) in the longitudinal direction, wherein the base frame (216) mounted on the two longitudinal ribs (122a, 122b) of the main frame (120) and inserted into the main frame (120) in the longitudinal direction is fixed on the two longitudinal ribs (122a, 122b) using the bolt (302), wherein the exterior cover (110) of the vehicle main body (100) and the rear cover (205) of the vehicle rear part (200) form a battery room (204) in which the battery device (31) is mounted.

2. The electric construction machine according to claim 1, wherein
fixing means for fixing the base frame (216) on the two longitudinal ribs (122a, 122b) of the main frame (120) includes not only the bolt (302) but also two positioning pins (301a, 301b) provided corresponding to the two longitudinal ribs of the main frame, and
the base frame (216) mounted on the two longitudinal ribs of the main frame is fixed on the two longitudinal ribs and prevented from coming off using the two positioning pins and the bolt, the base frame being detachable from the two longitudinal ribs by removing the positioning pins and the bolt.

3. The electric construction machine according to claim 1, wherein:
the vehicle rear part (200) further includes at least one rear post (218a, 218b) erected on a rear part of the base frame (216) and a battery storage structure (203) for storing the battery device (31), the battery storage structure being attached on the base frame with bolts and,
the rear post and the battery storage structure are equipped with wire attaching parts (220a, 220b, 312), and
the vehicle rear part (200) is movable with respect to the vehicle main body (100) by using a crane by attaching wires (311) for the crane to the wire attaching parts.

4. The electric construction machine according to claim 1, wherein
the vehicle rear part (200) further includes a battery storage structure (203) attached on the base frame and storing the battery device (31),
the battery storage structure (203) includes a battery table mount (251) mounted on the base frame (216) and multiple stages of battery tables (252 to 254) mounted on the battery table mount,
a battery table (252) as the lowermost one of the multiple stages of battery tables is fixed on the battery table mount using bolts, and
the multiple stages of battery tables are supported to be separate from each other in the vertical direction via posts (276a, 286a, 287a, 287b) and are integrated by fixing upper and lower ends of each of the posts to corresponding battery tables with bolts.

5. The electric construction machine according to claim 1, wherein
the vehicle main body (100) includes the cab seat (102) provided on the vehicle body frame (101) and a machine room (103) in which a plurality of devices including the electric motor (18) and an inverter (19) for controlling the electric motor are arranged, and
the rear cover (205) included in the vehicle rear part and having the shape imitating the counter weight covers a rear part, a right-hand part, a left-hand part and a top part of the vehicle rear part (200), and
the machine room is separated from the other parts of the vehicle main body by a partition plate (151, 152), and
when the vehicle rear part (200) is connected with the vehicle main body (100), the battery room (204) formed by the rear cover secures a space insulated from heat sources in the machine room by using the partition plate, the space preventing effects of heat on batteries of the battery device (31) arranged in the battery room.

## Patentansprüche

1. Elektrische Baumaschine, die eine Batterievorrichtung (31) aufweist, die an einem rückwärtigen Teil eines Fahrzeugaufbaus (3) angebracht ist, wobei die elektrische Baumaschine Arbeitsvorgänge durch Antreiben eines Elektromotors (18) mit der Batterievorrichtung durchführt,
wobei der Fahrzeugaufbau (3) aus einem Fahrzeug-Hauptaufbau (100) und einem Fahrzeugrückteil (200) zusammengesetzt ist,
wobei der Fahrzeug-Hauptaufbau (100) umfasst:
einen Fahrzeugaufbau-Rahmen (101), an dessen Vorderseite ein Arbeitsgerät (4) angebracht ist, und eine Fahrerkabine (102) sowie einen Maschinenraum (103), wobei die Fahrerkabine und der Maschinenraum (103) an dem Fahrzeugaufbau-Rahmen (101) vorgesehen sind,
und
eine äußere Verkleidung (110), die den Fahrzeug-Hauptaufbau (100) mit Ausnahme der Fahrerkabine (102) abdeckt,
wobei der Fahrzeugaufbau-Rahmen (101) einen Hauptrahmen (120) umfasst, an dessen Vorderseite das Arbeitsgerät (4) angebracht ist,
wobei der Hauptrahmen (120) einen hervorstehenden Teil (122) aufweist, der in einer Längsrichtung vorsteht und sich so weit erstreckt, dass er die Unterseite des Fahrzeugrückteils (200) erreicht,
wobei der Fahrzeugrückteil (200) einen rückwärtigen Rahmen (201), der an dem hervorstehenden Teil anzubringen ist, und eine Rückteilsverkleidung (205) umfasst, die den rückwärtigen Rahmen (201) abdeckt, wobei die Batterievorrichtung (31) in der Rückteilsverkleidung (205) angeordnet ist, deren Form ein Gegengewicht nachahmt,
wobei der an dem hervorstehenden Teil (122) angebrachte rückwärtige Rahmen (201) mit einem Schraubbolzen (302) an dem hervorstehenden Teil (122) befestigt und durch Entfernen des Schraubbolzens (302) von dem hervorstehenden Teil (122) abnehmbar ist,
**dadurch gekennzeichnet, dass**
der hervorstehende Teil (122) des Hauptrahmens (120) des Fahrzeug-Hauptaufbaus (100) zwei Längsrippen (122a, 122b) aufweist, die parallel in der Längsrichtung vorstehen und sich aus dem Inneren des Fahrzeug-Hauptaufbaus (100) so weit erstrecken, dass sie die Unterseite des rückwärtigen Rahmens (201) des Fahrzeugrückteils (200) erreichen,
wobei der rückwärtige Rahmen (201) des Fahrzeugrückteils (200) einen Grundrahmen (216) enthält, der mit den beiden Längsrippen (122a, 122b) des Hauptrahmens (120) von oben koppelt und längs der beiden Längsrippen (122a, 122b) in der Längsrichtung gleiten kann,
wobei der an den beiden Längsrippen (122a, 122b) des Hauptrahmens (120) angebrachte und in der Längsrichtung in den Hauptrahmen (120) eingeführte Grundrahmen (216) mit dem Schraubbolzen (302) an den beiden Längsrippen (122a, 122b) befestigt ist,
wobei die äußere Verkleidung (110) des Fahrzeug-Hauptaufbaus (100) und die Rückteilsverkleidung (205) des Fahrzeugrückteils (200) einen Batterieraum (204) bilden, in dem die Batterievorrichtung (31) angebracht ist.

2. Elektrische Baumaschine nach Anspruch 1, bei der die Befestigungseinrichtung zur Befestigung des Grundrahmens (216) an den beiden Längsrippen (122a, 122b) des Hauptrahmens (120) nicht nur den Schraubbolzen (302), sondern auch zwei Positionierzapfen (301a, 301b) umfasst, die entsprechend an den beiden Längsrippen des Hauptrahmens vorgesehen sind,
und
der an den beiden Längsrippen des Hauptrahmens angebrachte Grundrahmen (216) mittels der beiden Positionierzapfen und des Schraubbolzens an den beiden Längsrippen befestigt ist und nicht daraus herausrutschen kann, wobei der Grundrahmen durch Entfernen der Positionierzapfen und des Schraubbolzens von den beiden Längsrippen abnehmbar ist.

3. Elektrische Baumaschine nach Anspruch 1, bei welcher
der Fahrzeugrückteil (200) ferner mindestens eine rückwärtige Säule (218a, 218b), die an einem hinteren Teil des Grundrahmens (216) aufgebaut ist, und einen Batterielagerungs-Aufbau (203) zur Lagerung der Batterievorrichtung (31) umfasst, wobei der Batterielagerungs-Aufbau mit Bolzen an dem Grundrahmen angebracht ist,
und
die rückwärtige Säule und der Batterielagerungs-Aufbau mit Seilanschlussteilen (220a, 220b, 312) ausgerüstet sind
und
der Fahrzeugrückteil (200) mittels eines Krans durch Anbringen von Seilen (311) für den Kran an den Seilanschlussteilen in Bezug auf den Fahrzeug-Hauptaufbau (100) bewegbar ist.

4. Elektrische Baumaschine nach Anspruch 1, bei welcher
der Fahrzeugrückteil (200) ferner einen Batterielagerungs-Aufbau (203) aufweist, der an dem Grundrahmen angebracht ist und in dem die Batterievorrichtung (31) gelagert ist,
der Batterielagerungs-Aufbau (203) ein Batterietisch-Gestell (251), das auf dem Grundrahmen (216) angebracht ist, und mehrere Stufen von Batterietischen (252 bis 254) umfasst, die an dem Batterielagerungs-Aufbau angebracht sind,
ein Batterietisch (252) als unterster der mehreren Stufen von Batterietischen mittels Bolzen an dem Batterielagerungs-Aufbau angebracht ist
und
die mehreren Stufen von Batterietischen in der vertikalen Richtung durch Stützen (276a, 286a, 287a, 287b) voneinander getrennt gelagert und durch Befestigen des oberen und des unteren Endes jeder der Stützen an den entsprechenden Batterietischen mit Bolzen integriert sind.

5. Elektrische Baumaschine nach Anspruch 1, bei welcher
der Fahrzeug-Hauptaufbau (100) die auf dem Fahrzeugaufbau-Rahmen (101) vorgesehene Fahrerkabine (102) und einen Maschinenraum (103) umfasst, in dem eine Vielzahl von Vorrichtungen angeordnet sind, zu denen der Elektromotor (18) und ein Inverter (19) zur Steuerung des Elektromotors gehören,
und
die Rückteilsverkleidung (205), die in dem Fahrzeugrückteil enthalten ist und die Form aufweist, die das Gegengewicht nachahmt, einen rückwärtigen Teil, einen rechts liegenden Teil, einen links liegenden Teil und einen oberen Teil des Fahrzeugrückteils (200) abdeckt
und
der Maschinenraum durch eine Trennwand (151, 152) von den anderen Teilen des Fahrzeug-Hauptaufbaus getrennt ist
und,
wenn der Fahrzeugrückteil (200) mit dem Fahrzeug-Hauptaufbau (100) verbunden ist, der durch die Rückteilsverkleidung gebildete Batterieraum (204) einen mittels der Trennwand von Wärmequellen in dem Maschinenraum isolierten Raum sicherstellt, wobei der Raum Hitzeeinwirkungen auf Batterien der in dem Batterieraum angeordneten Batterievorrichtung (31) verhindert.

## Revendications

1. Engin de chantier électrique ayant un dispositif (31) de batteries monté sur une partie arrière d'une carrosserie (3) de véhicule, l'engin de chantier électrique exécutant des opérations en entraînant un moteur électrique (18) avec le dispositif de batteries,
dans lequel la carrosserie (3) de véhicule est constituée d'une carrosserie principale (100) de véhicule et d'une partie arrière (200) de véhicule,
dans lequel la carrosserie principale (100) de véhicule inclut un châssis (101) de carrosserie de véhicule sur l'avant duquel un accessoire de travail (4) est fixé et un siège (102) de cabine et un compartiment moteur (103), le siège de cabine et le compartiment moteur (103) étant disposés sur le châssis (101) de carrosserie de véhicule, et un capot extérieur (110) qui recouvre la carrosserie principale (100) de véhicule à l'exclusion du siège (102) de cabine,
dans lequel le châssis (101) de carrosserie de véhicule inclut un châssis principal (120) sur l'avant duquel l'accessoire de travail (4) est fixé,
dans lequel le châssis principal (120) a une partie en porte-à-faux (122) disposée en porte-à-faux et s'étendant dans un sens longitudinal jusqu'à atteindre le dessous de la partie arrière (200) de véhicule,
dans lequel la partie arrière (200) de véhicule inclut un châssis arrière (201) destiné à être monté sur la partie en porte-à-faux et un capot arrière (205) recouvrant le châssis arrière (201), le capot arrière (205) ayant le dispositif (31) de batteries agencé dans celui-ci et ayant une forme imitant un contrepoids,
dans lequel le châssis arrière (201) monté sur la partie en porte-à-faux (122) est fixé sur la partie en porte-à-faux (122) en utilisant un boulon (302) et est détachable de la partie en porte-à-faux (122) en enlevant le boulon (302),
**caractérisé en ce que**
la partie en porte-à-faux (122) du châssis principal (120) de la carrosserie principale (100) de véhicule inclut deux nervures longitudinales (122a, 122b) disposées en porte-à-faux et s'étendant en parallèle dans le sens longitudinal depuis l'intérieur de la carrosserie principale (100) de véhicule jusqu'à atteindre le dessous du châssis arrière (201) de la partie arrière (200) de véhicule,
dans lequel le châssis arrière (201) de la partie arrière (200) de véhicule inclut un châssis de base (216) qui se couple avec les deux nervures longitudinales (122a, 122b) du châssis principal (120) par le dessus et pour coulisser le long des deux nervures longitudinales (122a, 122b) dans le sens longitudinal,
dans lequel le châssis de base (216) monté sur les deux nervures longitudinales (122a, 122b) du châssis principal (120) et inséré dans le châssis principal (120) dans le sens longitudinal est fixé sur les deux nervures longitudinales (122a, 122b) en utilisant le boulon (302),
dans lequel le capot extérieur (110) de la carrosserie principale (100) de véhicule et le capot arrière (205) de la partie arrière (200) de véhicule forment un compartiment de batteries (204) dans lequel le dispositif (31) de batteries est monté.

2. Engin de chantier électrique selon la revendication 1, dans lequel
un moyen de fixation pour fixer le châssis de base (216) sur les deux nervures longitudinales (122a, 122b) du châssis principal (120) inclut non seulement le boulon (302) mais également deux goupilles de serrage (301a, 301b) prévues correspondantes aux deux nervures longitudinales du châssis principal, et
le châssis de base (216) monté sur les deux nervures longitudinales du châssis principal est fixé sur les deux nervures longitudinales et empêché d'échapper en utilisant les deux goupilles de serrage et le boulon, le châssis de base étant détachable des deux nervures longitudinales en déposant les deux goupilles de serrage et le boulon.

3. Engin de chantier électrique selon la revendication 1, dans lequel :
la partie arrière (200) de véhicule inclut en outre au moins un montant arrière (218a, 218b) érigé sur une partie arrière du châssis de base (216) et une structure (203) de stockage de batteries pour stocker le dispositif (31) de batteries, la structure de stockage de batteries étant fixée sur le châssis de base avec des boulons, et
le montant arrière et la structure de stockage de batteries sont équipés avec des parties de fixation (220a, 220b, 312) de câbles, et
la partie arrière (200) de véhicule est mobile par rapport à la carrosserie principale (100) de véhicule en utilisant une grue en fixant des câbles (311) pour la grue aux parties de fixation de câbles.

4. Engin de chantier électrique selon la revendication 1, dans lequel :
la partie arrière (200) de véhicule inclut en outre une structure (203) de stockage de batteries fixée sur le châssis de base et stockant le dispositif (31) de batteries,
la structure (203) de stockage de batteries inclut une monture (251) de table de batteries montée sur le châssis de base (216) et des étages multiples de tables (252 à 254) de batteries montés sur la monture de table de batteries,
une table (252) de batteries comme celui le plus inférieur des étages multiples de tables de batteries est fixée sur la monture de table de batteries en utilisant des boulons, et
les étages multiples de tables de batteries sont supportés de façon à être séparés les uns des autres dans le sens vertical par des montants (276a, 286a, 287a, 287b) et sont intégrés en fixant des extrémités supérieure et inférieure de chacun des montants à des tables de batteries correspondantes avec des boulons.

5. Engin de chantier électrique selon la revendication 1, dans lequel :
la carrosserie principale (100) de véhicule inclut le siège (102) de cabine disposé sur le châssis (101) de carrosserie de véhicule et un compartiment machine (103) dans lequel une pluralité de dispositifs incluant le moteur électrique (18) et un inverseur (19) pour commander le moteur électrique sont agencés, et
le capot arrière (205) inclus dans la partie arrière de véhicule et ayant la forme imitant le contrepoids recouvre une partie arrière, une partie droite, une partie gauche et une partie supérieure de la partie arrière (200) de véhicule, et
le compartiment machine est séparé des autres parties de la carrosserie principale de véhicule par une plaque de cloisonnement (151, 152), et
lorsque la partie arrière (200) de véhicule est connectée avec la carrosserie principale (100) de véhicule, le compartiment de batteries (204) formé par le capot arrière sécurise un espace isolé de sources de chaleur dans le compartiment machine en utilisant la plaque de cloisonnement, l'espace prévenant des effets de la chaleur sur les batteries du dispositif (31) de batteries agencé dans le compartiment de batteries.
